# EUROPEAN PATENT SPECIFICATION

(11) **EP 3 610 387 B1**
(45) Date of publication and mention of the grant of the patent: **13.04.2022**
(21) Application number: 17745124.2
(22) Date of filing: 30.05.2017
(51) Int. Cl.: G06F 16/901

(54) **DISTRIBUTED DATA STRUCTURES FOR SLIDING WINDOW AGGREGATION OR SIMILAR APPLICATIONS**
VERTEILTE DATENSTRUKTUREN FÜR SCHIEBEFENSTERAGGREGATION ODER ÄHNLICHE ANWENDUNGEN
STRUCTURES DE DONNÉES DISTRIBUÉES POUR AGRÉGATION DE FENÊTRE GLISSANTE OU APPLICATIONS SIMILAIRES

(30) Priority: 12.04.2017 EP 17382202
(43) Date of publication of application: 19.02.2020
(73) Proprietor: Barcelona Supercomputing Center-Centro Nacional de Supercomputación, 08034 Barcelona (ES); Universitat Politècnica De Catalunya, 08034 Barcelona (ES)
(72) Inventor: CARRERA PEREZ, David, 08034 Barcelona (ES); VILLALBA NAVARRO, Álvaro, 08225 Terrassa (ES)
(74) Representative: ZBM Patents - Zea, Barlocci & Markvardsen
(86) International application number: PCT/EP2017/063054
(87) International publication number: WO 2018/188765

(56) References cited:
- WO-A1-2013/067337
- US-A1- 2014 067 870
- HUA JI ET AL: "An Optimizing Nesting Algorithm with Heuristic Search Based on Binary Trees", COMPUTER SCIENCE AND SOFTWARE ENGINEERING, 2008 INTERNATIONAL CONFERENCE ON, IEEE, PISCATAWAY, NJ, USA, 12 December 2008 (2008-12-12), pages 124-127, XP031376837, ISBN: 978-0-7695-3336-0

## Description

This application claims the benefit of European Patent Application EP17382202.4 filed April 12, 2017.

The present disclosure relates to computer systems and storage systems for distributed storage of data structured as a forest of balanced trees suitable for e.g. sliding window aggregation or similar applications.

The present disclosure further relates to methods and corresponding computer programs suitable for being performed by such computer systems.

### BACKGROUND

It is known that data structures in the form of trees or forests of trees are used in various computational applications. In some applications, such tree-based structures may contain big amounts of data and, therefore, its computation may require large amounts of (execution) memory.

For example, the fast evolution of data analytics platforms has resulted in an increasing demand for real-time data stream processing. From Internet of Things applications to the monitoring of telemetry generated in large data centres, a common demand for currently emerging scenarios is the need to process vast amounts of data with low latencies, generally performing the analysis process as spatially close to the data source as possible.

Stream processing platforms are required to be versatile and absorb spikes generated by fluctuations of data generation rates. Data is usually produced as time series that have to be aggregated using multiple operators, being sliding windows one of the most common principles used to process data in real-time. To satisfy the abovementioned demands, efficient stream processing techniques that aggregate data with minimal computational cost may be required.

Data streams are unbound sequences of ordered atomic updates (or data units) on the same information feature. For example, a stream associated to the temperature of a physical device D contains a sequence of updates of such temperature information coming from device D, each update substituting the previous one. Given that a stream emits updates indefinitely such sequences of updates cannot be traversed upstream as they do not have finite size and lack boundaries. Instead, selecting a limited window on the updates within a data stream is commonly considered one of the most affordable method for analysing the data and information coming from a data source. It is for this kind of processing that projecting data from streams into sliding windows may be a convenient mechanism towards data analysis and aggregation.

A sliding window may be defined as an abstraction representing projections on data sequences, organized as First-In-First-Out (FIFO) structures containing elements of the same type (the data updates or data units from a data stream). Data updates may enter the sliding window when they are received from the data source (data stream), and may be removed according to a set of conditions or criteria. A sliding window may always contain the most recently generated updates or data units from a corresponding stream.

Applications that process data streams usually define a set of aggregation operations that when computed produce a result associated to the streams. Due to the unbound nature of streams, sliding windows are a convenient approach to processing such aggregations, by defining the subset of data units to be considered for processing. Therefore, for their computational purpose sliding windows may get associated with at least one aggregation function that is computed for the contained elements whenever the window content is updated.

An aggregation may be expressed as a monoid. A monoid is an algebraic structure with an associative binary operation and a neutral (or null) element. They have been extensively used in the literature for the implementation of data aggregations.

More formally, where S is a set and • is a binary operation, the operation composes a monoid if it obeys the following principles:
Associativity: For all a, *b* and c in S, the expression (a • *b)* • c = a • *(b* • c) is true.

Neutral element: There exists a value e in S that for all a the expression e • a = a • e = a is true.

Closure: For all a and b in S, the result of a • b is in S too.

In applications wherein data from data streams are processed by computer systems located as spatially close as possible to data sources, said computer systems are normally dimensioned with reduced size and restricted computational resources. For example, when data sources comprise large amounts of sensors distributed over a big city or similar scenario, lots of computer systems are used to provide all sensor sites with suitable processing functionalities. Spatial restrictions at the sensor sites may also condition the size and computational power of the computer systems.

When the same computer system is used to process data from different data streams, the aforementioned restrictions may result aggravated since computational resources are shared between different processes. This situation may occur in either the aforementioned distributed approach or even in a centralised approach wherein a central computer system receives data from lots of different data streams (sensor sites). In any of these cases, corresponding processes may thus result inefficient and/or unreliable in the context of e.g. streaming applications. If with the aim of solving these limitations, the computer systems are provided with more powerful resources, the whole system may result more expensive.

An object of the present disclosure is to improve prior art systems, methods and computer programs aimed at processing data structured as tree-based arrangements, in particular, as forests of balanced trees implementing e.g. aggregation of data in a sliding window.

US 2014/067870 A1 discloses a computer system for distributed storage of data structured as a forest of balanced trees of one or more nodes.

### SUMMARY

The invention is defined by the attached claims.

In an aspect, a computer system is provided for distributed storage of data structured as a forest of balanced trees of one or more nodes, each node including a plurality of data-elements, and the forest comprising a plurality of levels including a top level and a bottom or leaf level. The nodes in the forest comprise first end nodes at a first side of the forest, second end nodes at a second side of the forest, and intermediate nodes between the first and second end nodes.

The computer system comprises a memory to store at least the first and second end nodes, and a connector to implement a connection with a storage system configured to store intermediate nodes of the forest. Exchange of nodes with the storage system is performed (by the computer system) through said connexion.

The computer system further comprises a processor to update the nodes stored in the memory according to updating criteria, and to exchange nodes with the storage system through the connection according to exchange criteria.

The proposed computer system bases its operation on storing (and correspondingly updating) a forest such as the ones suggested in other parts of the description, with only a part of the forest in (execution) memory of the computer system. This may permit processing much larger forests in comparison with prior art systems storing complete forests in memory. Hence, efficiency and/or reliability of e.g. aggregating data in a sliding window implemented by the "distributed" forest (in streaming applications) may be significantly improved.

Another advantage may be that several forests receiving data units from several data streams may implement corresponding sliding windows without the need of using excessive amounts of memory. Prior systems storing entire tree-based structures may need much more memory in comparison with computer systems according to the present disclosure.

The aforementioned advantages may be especially profitable in configurations wherein many sensor sites are provided with corresponding computer systems as spatially close as possible to the sensors. In these circumstances, relatively cheap computer systems according to the present disclosure may cooperate with corresponding storage system(s) to store higher numbers of forests and/or bigger forests. As described in other parts of the description, suitable transfer of nodes between computer and storage systems may be performed in order to have balanced amounts of data distributed between the computer and storage systems.

In a further aspect, a storage system is provided for distributed storage of data structured as a forest of balanced trees of one or more nodes, each node including a plurality of data-elements, and the forest comprising a plurality of levels including a top level and a bottom or leaf level. The nodes in the forest comprise first end nodes at a first side of the forest, second end nodes at a second side of the forest, and intermediate nodes between the first and second end nodes.

The storage system comprises a memory to store at least some of the intermediate nodes, and a connector to implement a connection with a computer system which is configured to store and update at least the first and second end nodes of the forest. Exchange of nodes with the computer system is performed (by the computer system) through said connexion.

Proposed storage system(s) may cooperate with corresponding computer system(s) for storing bigger forests and/or larger quantities of tree-based structures in a more efficient/reliable manner than prior art systems (storing whole tree-based structures). Details about said cooperation are provided in other parts of the description.

In some examples, a complete system may also be provided for distributed storage of data structured as a forest of balanced trees, the system comprising a computer system and a storage system such as the ones described before. The computer system and the storage system may be connectable (or connected) with each other through a connection between the connector of the computer system and the connector of the storage system. Once connected, the computer and storage systems may cooperate as described in other parts of the disclosure to store large forests and/or various forests.

In a still further aspect, a method is provided for updating distributed data structured as a forest of balanced trees of one or more nodes, each node including a plurality of data-elements, and the forest comprising a plurality of levels including a top level and a bottom or leaf level. The nodes in the forest comprise first end nodes at a first side of the forest, second end nodes at a second side of the forest, and intermediate nodes between the first and second end nodes.

The suggested method comprises storing, by a processor of a computer system, at least the first and second end nodes into a memory of the computer system, and updating, by the processor, the nodes stored in the memory according to updating criteria.

The method further comprises exchanging, by the processor, nodes with a storage system through a connection according to exchange criteria, the storage system being configured to store intermediate nodes of the forest, and the connection being implemented through a connector of the computer system.

The suggested method, which is based on principles described above with respect to computer and storage systems, may thus permit distributed storage of forests with larger amounts of data and/or various forests, in comparison with prior art systems storing complete (forests of) tree-based structures.

In a yet further aspect, a computer program is provided comprising program instructions for causing a computer system to perform a method, such as e.g. the one described before, for updating distributed data structured as a forest of balanced trees. The computer program may be embodied on a storage medium and/or may be carried on a carrier signal.

### BRIEF DESCRIPTION OF THE DRAWINGS

Non-limiting examples of the present disclosure will be described in the following, with reference to the appended drawings, in which:
Figure 1a is a schematic representation of computer and storage systems according to examples in the context of a first architecture;
Figure 1b is a schematic representation of computer and storage systems according to examples in the context of a second configuration;
Figure 1c is a block diagram of computer and storage systems connected to each other according to examples;
Figures 1d, 1e schematically illustrate a forest structure suitable for being stored and updated in a configuration with corresponding computer and storage systems, such as the ones depicted in previous figures;
Figure 2 is a flowchart schematically illustrating a method according to examples for updating distributed data structured as a forest of balanced trees implementing a sliding window in a streaming application;
Figure 3 is a flowchart schematically illustrating examples of inserting a data unit in a forest structure implementing a sliding window, in the context of a method such as the one shown in Figure 2 or similar;
Figures 4a - 4i schematically illustrate a forest structure and its evolution due to insertions of data units in the forest performed in same or similar way as shown in flowchart of Figure 3;
Figure 5 is a flowchart schematically illustrating further examples of inserting a data unit in a forest structure implementing a sliding window, in the context of a method such as the one shown in Figure 2 or similar;
Figure 6 is a flowchart schematically illustrating examples of determining from scratch partial results of a whole window aggregation in the context of a method such as the one shown in Figure 2 or similar;
Figure 7 shows the forest of Figure 4i along with corresponding result node and stack updated according to sub-method of Figure 6 or similar;
Figure 8 is a flowchart schematically illustrating examples of deleting a data unit from a forest structure implementing a sliding window in the context of a method such as the one shown in Figure 2 or similar;
Figures 9a - 9h schematically illustrate a forest structure and its evolution due to deletion of data units performed in same or similar way as indicated in Figure 8;
Figure 10 is a flowchart schematically illustrating further examples of deleting data unit(s) from a forest structure implementing a sliding window in the context of a method such as the one shown in Figure 2 or similar;
Figure 11 is a flowchart schematically illustrating other examples of deleting data unit(s) from a forest structure implementing a sliding window in the context of a method such as the one shown in Figure 2 or similar;
Figures 12a - 12e show a window/forest and its evolution due to execution of a "massive" deletion sub-method such as the one of Figure 11 or similar;
Figure 13 is a flowchart schematically illustrating still further examples of deleting data unit(s) from a forest structure implementing a sliding window in the context of a method such as the one shown in Figure 2 or similar; and
Figures 14a - 14c show a window with corresponding forest, result node and stack and their evolution due to execution of a deletion sub-method such as the one of Figure 13 or similar.

### DETAILED DESCRIPTION OF EXAMPLES

### Computer and storage systems

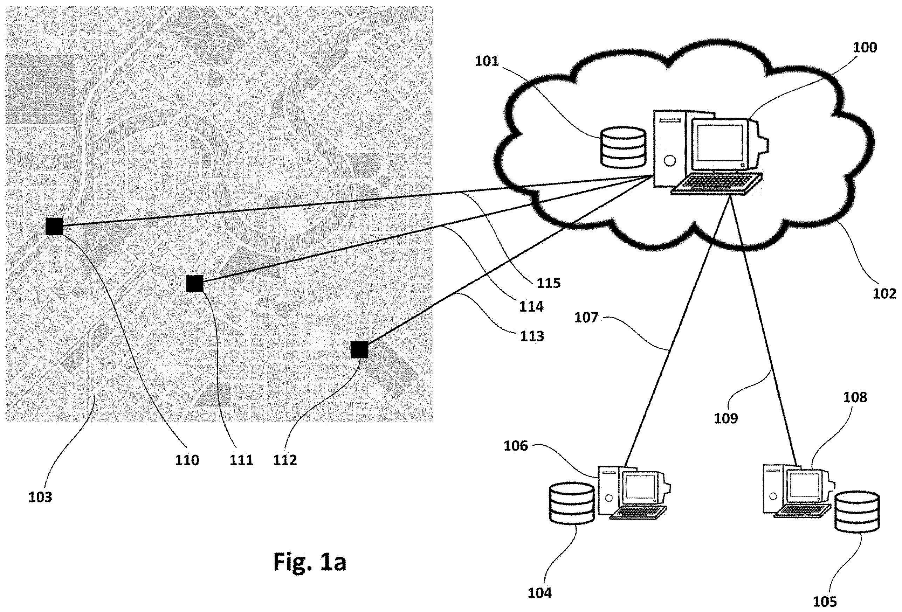

Figure 1a is a schematic representation of computer and storage systems according to examples in the context of a first architecture. In this case, a centralised approach is illustrated wherein a single computer system 100 receives data from a plurality of sensor sites 110 - 112.

The computer system 100 may be at the cloud 102 or may provide corresponding services through the cloud 102. The computer system 100 may be connected with a plurality of sensors 110 - 112 through suitable connections 113 - 115, respectively, in such a way that a stream of data generated from said sensors may be received by the system 100. Said connections 113 - 115 may be e.g. wireless or wired connections and, in some examples, may be implemented through a communications network such as e.g. Internet. The sensors may be e.g. temperature sensors, humidity sensors, pollution sensors, wind sensors, etc. installed at different locations of e.g. a city or town 103, a data processing centre, a factory, etc.

An intermediate system (not shown) may intermediate between the sensors 110 - 112 and the computer system 100. This intermediate system may be configured to generate data streams aimed at providing data units from data produced by the sensors.

The system 100 may be connected with further systems 106, 108 through corresponding connections 107, 109, respectively. Said connections 107, 109 may be e.g. wireless o wired connections and, in some examples, may be implemented through a communications network such as e.g. Internet. Each of the further systems 106, 108 may comprise corresponding memory or storage device 104, 105, respectively. One of said further systems 106, 108 may be a storage system 106 according to the present disclosure.

Computer system 100 and storage system 106 may cooperate to store data structured as a forest of balanced trees in a distributed manner. That is, computer system 100 may store a part of the forest and storage system 106 may store the remaining part of the forest. Details about this distributed storage are provided in other parts of the description.

Another of the further systems 106, 108 may be a system 108 dedicated to e.g. consume data from the computer system 100 which may therefore act as a service/data provider. Aggregated data in the form of e.g. average values, maximum values, minimum values, etc. may be provided by the computer system 100 (through corresponding connection 109) to the consumer system 108. Then, said system 108 may process/analyse received aggregated data to e.g. determine corrective and/or preventive actions to at least attenuate distorting or harmful conditions inferred from the aggregated data.

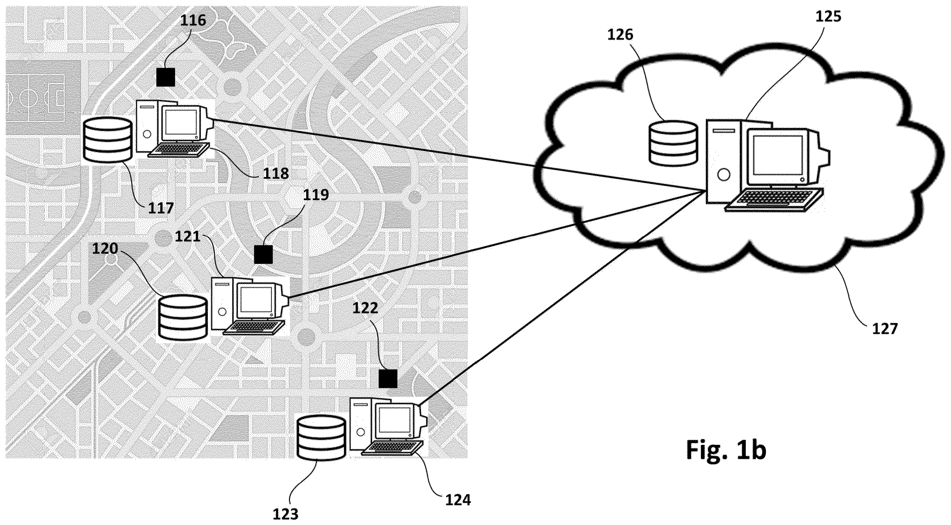

Figure 1b is a schematic representation of computer and storage systems according to examples in the context of a second configuration. This figure is similar to previous Figure 1a. In this case, however, a decentralized approach is proposed wherein each of a plurality of sensor sites 116, 119, 122 are provided with corresponding computer systems 118, 121, 124 according to the present disclosure, respectively.

Each of said computer systems 118, 121, 124 may have corresponding processor and memory 117, 120, 123 respectively, and may be connected to a storage system 125 with corresponding memory 126. The storage system 125 may be at the cloud 127, for example. Each computer system 118, 121, 124 may receive sensor data from its associated sensor site 116, 119, 122, respectively.

Similarly to previous Figure 1a, each of the computer systems 118, 121, 124 and storage system 125 may cooperate to store data (from sensors) structured as a forest of balanced trees, respectively. That is, each of the computer systems 118, 121, 124 may store a part of corresponding forest and storage system 125 may store the remaining part of the forest. Details about this distributed storage are provided in other parts of the description.

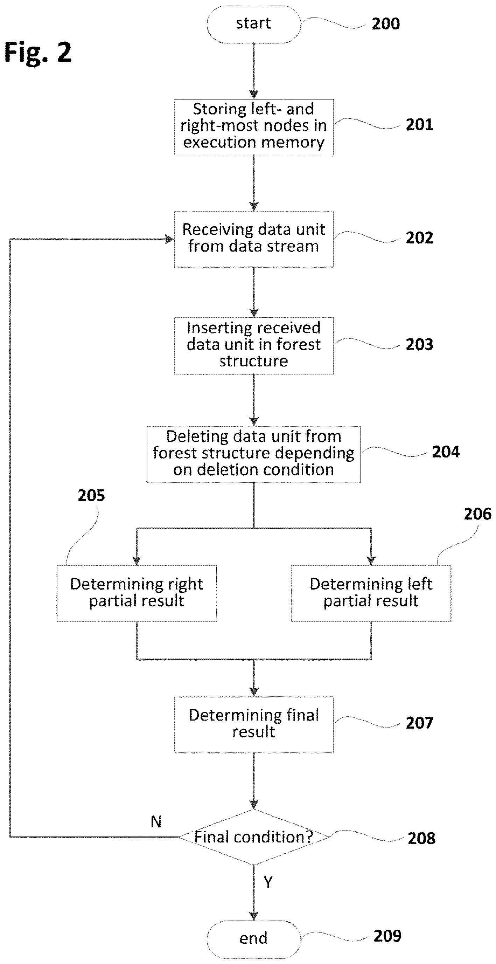

Any of the above computer systems 100, 118, 121, 124 may be implemented by computing means, electronic means or a combination thereof. The computing means may be a set of instructions (that is, a computer program) and then the computer system 100, 118, 121, 124 may comprise a memory (or storage media) and a processor, embodying said set of instructions stored in the memory and executable by the processor. The instructions may comprise functionality to execute methods such as e.g. the ones described with reference to Figures 2 - 14c.

In case the computer system 100, 118, 121, 124 is implemented only by electronic means, the controller may be, for example, a microcontroller, a CPLD (Complex Programmable Logic Device), an FPGA (Field Programmable Gate Array) or an ASIC (Application-Specific Integrated Circuit).

In case the computer system 100, 118, 121, 124 is a combination of electronic and computing means, the computing means may be a set of instructions (e.g. a computer program) and the electronic means may be any electronic circuit capable of implementing the corresponding step or steps of the cited methods.

The computer program may be embodied on a storage medium (for example, a CD-ROM, a DVD, a USB drive, a computer memory or a read-only memory) or carried on a carrier signal (for example, on an electrical or optical carrier signal).

The computer program may be in the form of source code, object code, a code intermediate source and object code such as in partially compiled form, or in any other form suitable for use in the implementation of methods according to the present disclosure. The carrier may be any entity or device capable of carrying the computer program.

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program is embodied in a signal that may be conveyed directly by a cable or other device or means, the carrier may be constituted by such cable or other device or means.

Alternatively, the carrier may be an integrated circuit in which the computer program is embedded, the integrated circuit being adapted for performing, or for use in the performance of, the relevant methods.

With respect to technical configuration of storage systems 106, 125, similar considerations to those commented with respect to computer systems 100, 118, 121, 124 may be attributed to storage system 106, 125. One difference is that storage systems 106, 125 may need lower computational capacities in comparison with computer systems, since storage systems 106, 125 are merely used to store data and exchange data with computer systems 100, 118, 121, 124.

Computer systems 100, 118, 121, 124 may aggregate data units from data stream(s) to e.g. continuously produce aggregated values (e.g. average, maximum, minimum... values) from sensor data.

Said aggregated values may be e.g. pollution values in the city 103. In further examples, the aggregated values may be e.g. temperature values in a data processing centre aimed at monitoring the state of different computers in the centre. In still further examples, the aggregated values may be e.g. temperature values in a factory with the purpose of monitoring the state of machinery in the factory.

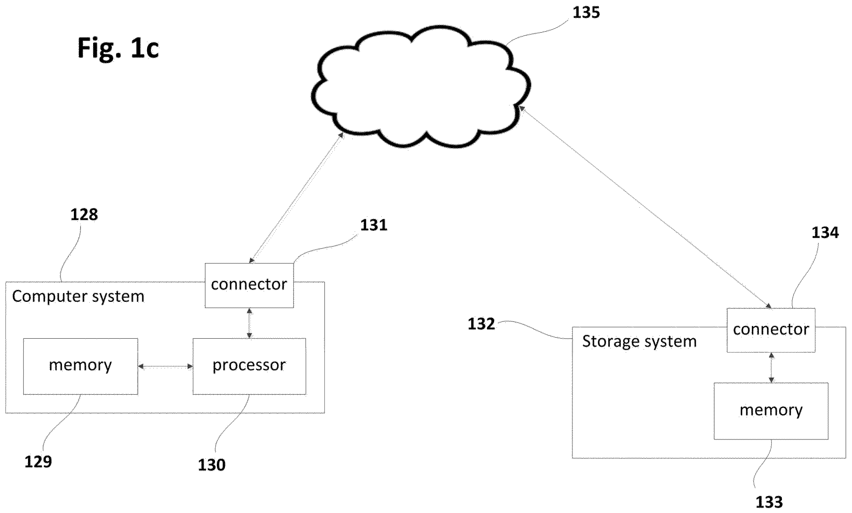

Figure 1c is a block diagram of computer and storage systems connected to each other according to the invention.

Computer system 128 2. comprises an (execution) memory 129, a connector 131 and a processor 130.

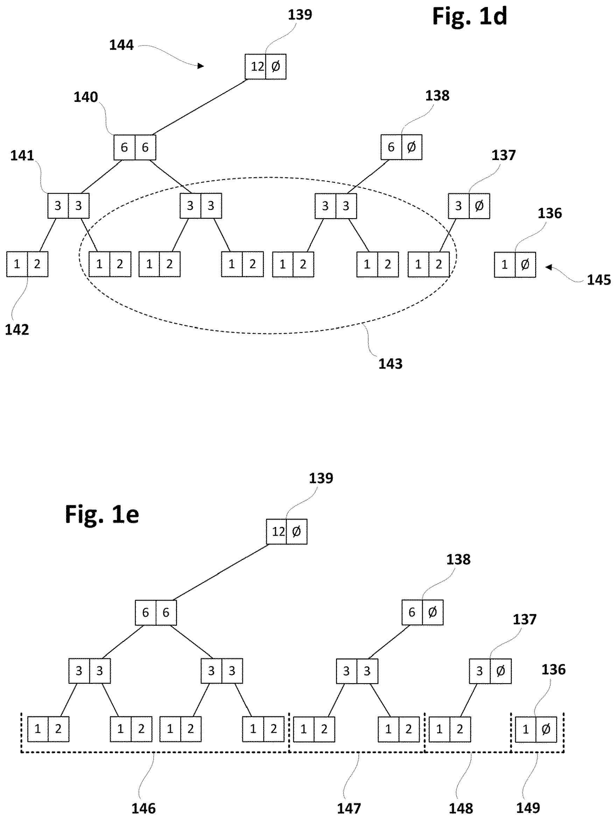

Memory 129 is configured to store at least the first and second end nodes of a forest of balanced trees according to the invention. Details about examples of such forests are provided in other parts of the description with reference to other figures (see e.g. Figures 1d, 1e, 4a - 4i, 7, 9a - 9h, 12a - 12e, 14a - 14c and corresponding descriptions).

Connector 131 is bo configured to implement a connection with storage system 132 which is configured to store at least some of the intermediate nodes of the forest (see e.g. Figures 1d, 1e and corresponding descriptions). Exchange of nodes or data-elements in the nodes with the storage system 132 is performed through said connection.

Processor 130 is configured to update the nodes (or data-elements in the nodes) stored in the memory 129 according to updating criteria, and to exchange nodes (or data-elements) with the storage system 132 through the connection according to exchange criteria.

Storage system 132 comprises a memory 133 for storing at least some of the intermediate nodes of the forest (see e.g. Figures 1d, 1e and corresponding descriptions). Storage system 132 further comprises a connector 134 for implementing a connection with computer system 128 (storing and updating at least the first and second end nodes of the forest). Exchange of nodes (i.e. data-elements) with the computer system 128 is performed through said connection.

In the particular example shown, computer system 128 and storage system 132 may be connected to each other through a communications network 135, such as e.g. Internet. In particular, computer system 128 may be connected to the network 135 through connector 130 and storage system 132 may be connected to the network 135 through connector 134.

Principles commented with respect to Figure 1c may be similarly applied to configurations described with reference to Figures 1a, 1b, and vice versa. Computer and storage systems have been previously described with respect to Figures 1a - 1c as separate systems. However, it is also possible that, in some examples, the storage system is comprised in the computer system. Figures 1d, 1e schematically illustrate a forest structure suitable for being stored (and updated) in a configuration with corresponding computer and storage systems, such as the ones depicted in previous Figures 1a - 1c.

In Figure 1d, a particular forest is shown which may be stored in a distributed manner between corresponding computer and storage systems according to the invention. This type of forest is a forest of balanced trees of one or more nodes, each node including a plurality of data-elements. The forests also comprise a plurality of levels including a top level 144 and a bottom or leaf level 145.

According to the invention, the nodes in the forest comprise first end nodes 139 - 136 at a first side of the forest, second end nodes 139 - 142 at a second side of the forest, and intermediate nodes 143 between the first and second end nodes. In the particular example shown, first side is right side and second side is left side. For the sake of simplicity, this principle has been assumed in Figures 2 - 14c. In this sense, first end nodes 139 - 136 may be referred to as rightmost nodes, and second end nodes 139 - 142 may be referred to as leftmost nodes.

In other examples, the first side may be the left side and the second side may be the right side. In such a case, first end nodes 139 - 136 could be referred to as leftmost nodes, and second end nodes 139 - 142 could be referred to as rightmost nodes.

Figure 1e shows that in forests of the proposed type, first end nodes (or, for reasons of simplicity, rightmost nodes) may be a root nodes of trees in the forest. In the particular example shown, the forest has leftmost tree 146 with rightmost node 139 as root node of said tree 146, next tree 147 with rightmost node 138 as root node of said tree 147, next tree 148 with rightmost node 137 as root node of said tree 148, and rightmost tree 149 with rightmost node 136 as root node of said tree 149.

In forests according to the present disclosure, such as the ones shown in Figures 1d and 1e, all data-elements in all intermediate nodes may be different from null. Besides, each of the first/second end nodes at non-top levels either may have all data-elements different from null, or have consecutive data-elements different from null and consecutive data-elements equal to null, the non-null data-elements being farther and the null data-elements being closer with respect to the first/second side of the forest, respectively.

As shown in Figures 1d, 1e and others (e.g. 4a - 4i, 7, 9a - 9h, 12a - 12e, 14a - 14c), only end nodes may have nulls in right data-elements at rightmost nodes and in left data-elements at leftmost nodes. The remaining data-elements may only be different from null.

Methods according to the present disclosure may generate and update a forest structure according to the above type, in which aggregations may be performed at a rightmost region and at a leftmost region of the forest. Hence, nodes of the forest that are in an intermediate region of the forest (i.e. outside the rightmost and leftmost regions) may be temporarily stored outside the computer system. This may cause that the amount of memory required in the computer system is minimized. As commented before, nodes not stored in the memory of the computer system may be stored in a corresponding storage system.

The rightmost region of the forest may comprise the rightmost (or first end) nodes and, optionally, a number of consecutive intermediate nodes neighbouring the first end node (at each of the levels). The leftmost region of the forest may comprise the leftmost (or second end) nodes and, optionally, a number of consecutive intermediate nodes neighbouring the second end node (at each of the levels).

Aggregations in proposed methods may be performed through an aggregation function that has associative property and corresponding neutral (or null) element.

### Global view of methods

Figure 2 is a flowchart schematically illustrating a method according to examples for distributed storage of a forest of balanced trees. This method may further comprise determining a final aggregation of a sliding window for updating the forest in the context of a streaming application. This method (or similar) may be implemented as e.g. a computer program in a system such as the computer system 100 of Figure 1a. This program may be iteratively executed so that all or part of data units received from data stream(s) may be processed according to the following principles.

Aggregations in methods according to the present disclosure may be performed using one or more associative binary operations which are also known as monoids. These operations may be commutative or not, and may include a neutral element that may be also referred to in the present disclosure as null or through symbol 'ø'.

At block 200, the method may be started as a result of detecting a starting condition such as e.g. upon reception of a petition requesting the start of the method. The starting condition may also correspond to e.g. reception of a data unit, i.e. block 200 may be triggered each time one or more data units are received from corresponding data stream(s).

At block 201, current leftmost and rightmost regions of the forest may be stored in the memory of the computer system, if they have not been already stored therein in previous executions of the method. Nodes not included in leftmost and rightmost regions may be stored in corresponding storage system, such as e.g. a remote database (storage system). This selective storing approach may be especially advantageous when computer systems are located as spatially close as possible to data source (e.g. sensor sites). Since only a small part of the forest may be stored in the computer system, its computational resources may be used more optimally and/or more forests of possibly larger size may be stored in (execution) memory. Bigger forest structures may increase efficiency and accuracy in determining e.g. final aggregations of the sliding window. Larger amounts of forests may permit processing data from more data streams.

Execution of the method may start from an empty forest or from a non-empty forest generated according to examples of methods according to the present disclosure. For example, the non-empty forest may result from previous iterations of same method.

At block 202, one or more data units (including e.g. a production time) may be received from corresponding data stream(s). The received data units may be stored in e.g. an input queue in production time order so that most recently produced data unit may be processed last.

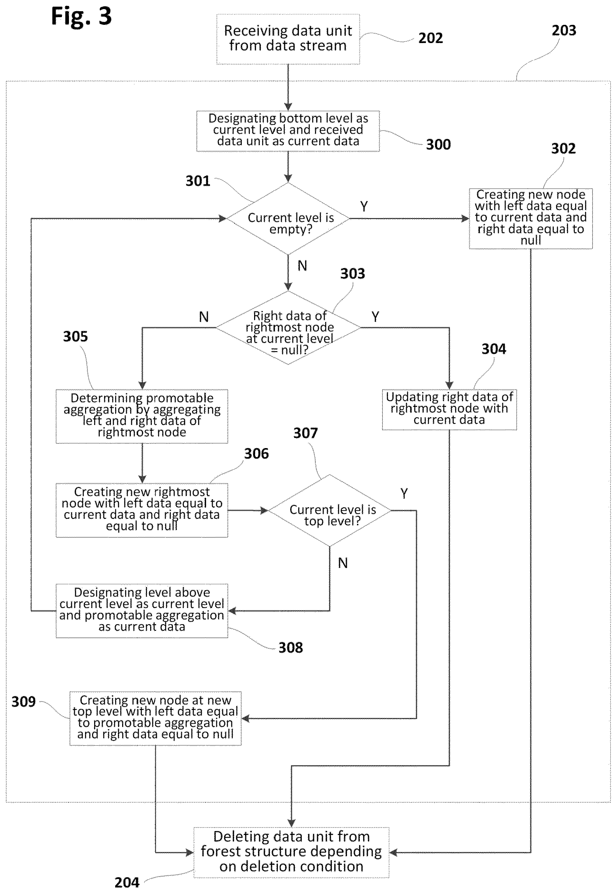

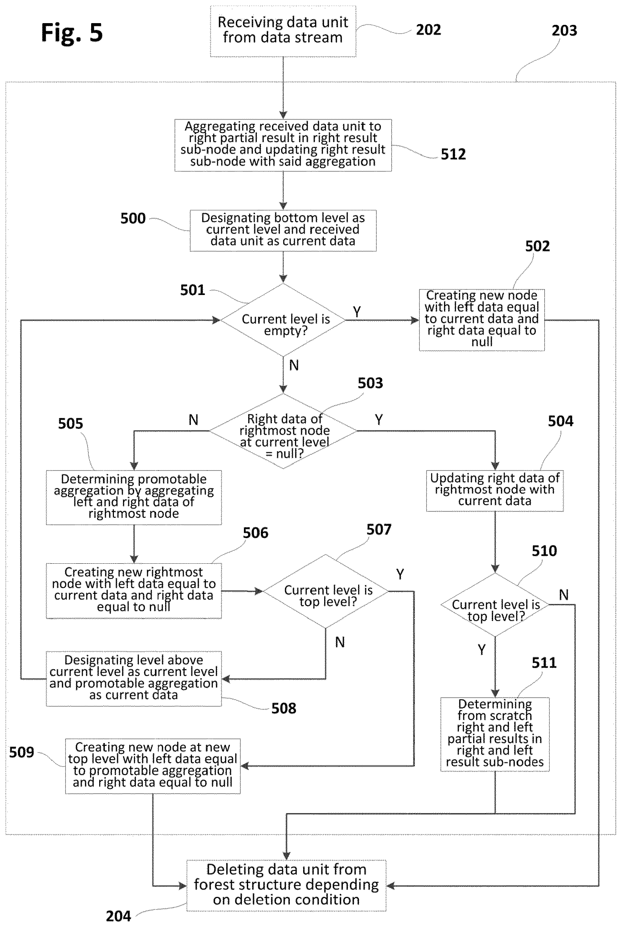

At block 203, a data unit (from e.g. input queue) may be inserted in a forest structure according to different approaches such as e.g. those shown in Figures 3 and 5 or similar. As commented before, data units may be inserted in the forest depending on production time, in such a way that the most recently produced data unit may be inserted last. Block 203 may be executed as many times as needed before continuing to next block. In particular, block 203 may be performed for each of the received data units according to production time order.

Insertion of a data unit may provoke, at any of the levels, creation of a new first end (or rightmost) node and transformation of a first end (or rightmost) node to intermediate node and, hence, an increase in the number of nodes at that level stored in the computer system. In this case, the computer system may send an intermediate node to the storage system for compensating such an increase. This rule may be implemented in a diversity of manners. For example, transfer of a given number of nodes (e.g. 10, 20, 30 or any other predefined amount) from computer system to storage system may be performed each time the number of nodes has been increased by a quantity equal or similar to said given number of nodes.

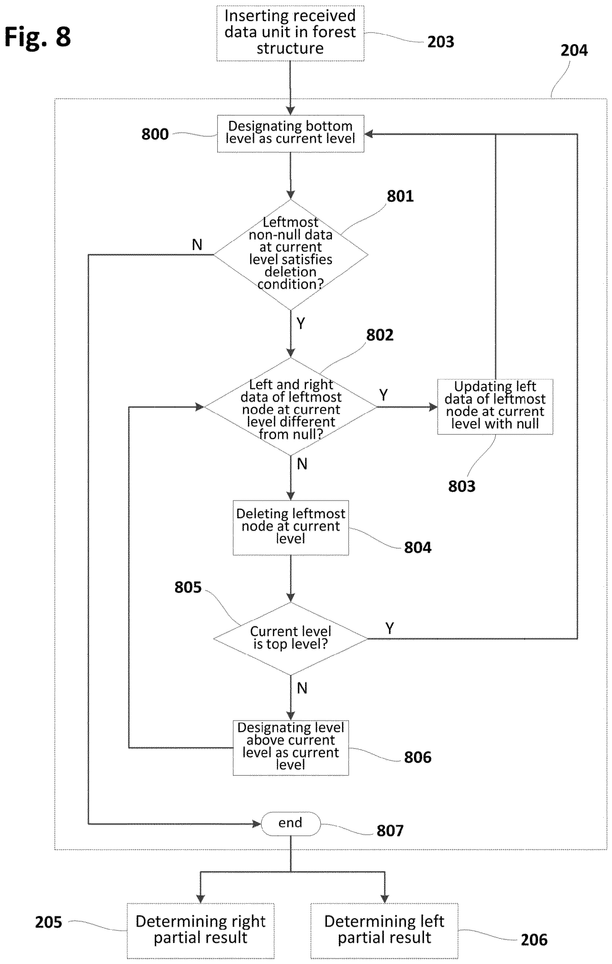

At block 204, the method may include a verification of whether a predefined deletion condition is satisfied. In case of positive (or true) result of said verification, data unit(s) may be deleted from the forest. Otherwise, no deletion may be carried out. Deletion condition may comprise e.g. a maximum number of data units in the forest in such a way that one or more deletions may be performed only when said maximum is achieved. Deletion of data unit(s) may be performed according to different approaches such as e.g. any of the ones shown in Figures 8, 10, 11, 13 or similar.

Deletion of a data unit may provoke, at any of the levels, deletion of an existing second end (or leftmost) node and transformation of an intermediate node to new second end (or leftmost) node and, hence, a decrease in the number of nodes at that level stored in the computer system. In this case, the computer system may retrieve an intermediate node from the storage system for compensating such a decrease. This principle may be implemented in a diversity of manners. For example, transfer of a given number of nodes (e.g. 10, 20, 30 or any other predefined amount) from storage system to computer system may be performed each time the number of nodes has been decreased by a quantity equal or similar to said given number of nodes.

At block 205, a right partial result may be determined depending on rightmost nodes in the forest and, at block 206, a left partial result may be determined depending on leftmost nodes in the forest. Right and left partial results may be determined in different ways depending on how data units have been inserted in the forest and, in some circumstances, how data units have been deleted from the forest. Right and left partial results may be understood as partial aggregations corresponding to respective right and left portions of the forest whose combination results in the whole forest.

In some examples, if insertion/deletion of data units comprises an incremental updating of a result node including right and left partial results, determining right and left partial results may comprise retrieving corresponding values from said result node.

In other examples without incremental updating of a result node, determining right partial result may comprise aggregating corresponding rightmost nodes, and determining left partial result may comprise aggregating corresponding leftmost nodes.

At block 207, a final aggregation of the whole window may be determined by aggregating right and left partial results determined at blocks 205 and 206 respectively. Final aggregation(s) or aggregated data may be processed or analysed to infer distorting or harmful conditions and accordingly determine corrective/preventive actions to at least attenuate said distorting or harmful conditions. This analysis of the aggregated data may be performed by the same computer system that produces the aggregated data, or by an external system that may be located at e.g. a remote location with respect to the computer system.

At block 208, the method may include a verification of whether a predefined ending condition is satisfied. In case of positive (or true) result of said verification, a transition to block 209 may be performed for ending the execution of the method. Otherwise, the method may loop back to block 202 for receiving new data unit(s) from data stream(s) and therefore starting a new iteration.

In some examples, the final condition may comprise a petition requesting completion of the method, in which case the method (computer program) may be completely finalized (at block 209). In other examples, the final condition may include a maximum elapsed time without receiving any data unit from data stream(s), in which case the method/program may be transitioned (at block 209) to standby state. At block 209, standby state may cause deactivation of the computer program while waiting for new data units and its reactivation upon reception of new data unit(s).

### Insertion

Figure 3 is a flowchart schematically illustrating insertion of a data unit in a forest structure implementing a sliding window in the context of a method such as the one shown in Figure 2 or similar. Figure 3 includes some number references from Figure 2 because it shows a possible implementation of block 203 (or similar) with corresponding previous block 202 (or similar) and subsequent block 204 (or similar).

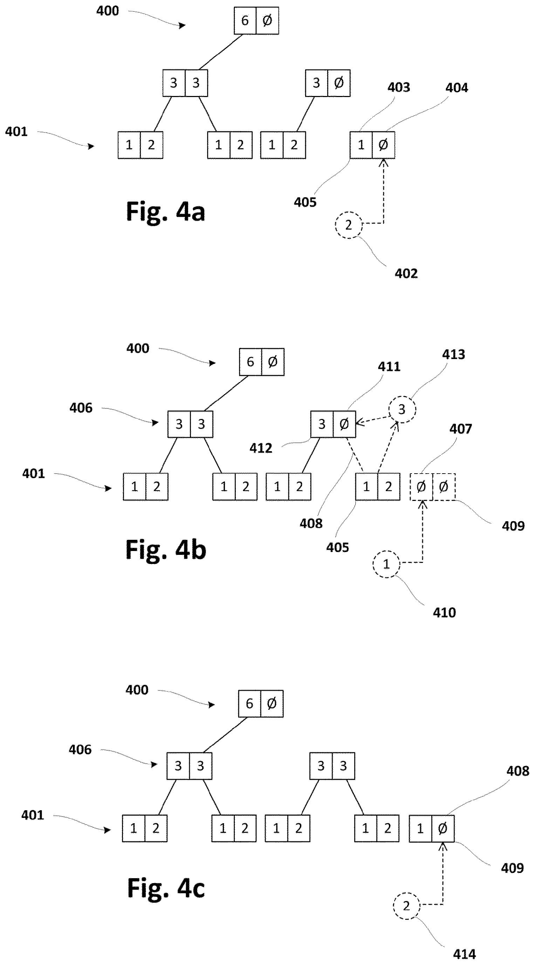

Figures 4a - 4i schematically illustrate a forest structure and its evolution due to insertion of data units performed in same or similar way as indicated in Figure 3. Symbol 'ø' is utilized in Figures 4a - 4i to indicate null or neutral element of corresponding monoid used to perform aggregations. Addition is used for performing aggregations in this particular example, even though any other monoid operation could be employed for that aim. For the sake of understanding, number references from Figures 4a - 4i may be used in following description of Figure 3.

The forests depicted in Figures 4a - 4i have a bottom level 401 and a top level 400, and each of the levels may have a rightmost node. Figure 4a shows an initial forest that may have been produced by methods according to the present disclosure starting from an empty forest. Rightmost node at bottom level 401 in said initial forest is indicated in Figure 4a with number reference 405. Figures 4b - 4i show different evolutions of said initial forest due to insertions performed according to flowchart of Figure 3 or similar.

Figures 4a - 4i show forests of binary trees for the sake of simplicity, but methods according to the present disclosure producing (and/or dealing with) forests of trees based on more than two dimensions are also possible.

At block 300, bottom level 401 of the forest may be designated (or set) as current level (i.e. level that is being processed in present iteration), and received data unit (from block 202) may be designated (or set) as current data.

At block 301, a verification of whether current level (of the forest) is empty may be performed, in which case a transition to block 302 may be performed and, otherwise, the method may continue to block 303.

At block 302, a new node may be created (in the memory of the computer system) with left data equal to current data (which corresponds to received data unit in first iteration) and right data equal to null (or neutral element). Once the new node has been created, the insertion of the data unit may be finalized by transitioning to block 204 (Figure 2).

Left and right data of a given node in the forest may be defined with reference to Figure 4a, wherein rightmost node 405 at bottom level 401 is shown with left data 403 equal to '1' and right data 404 equal to 'ø' (null or neutral element).

At block 303, a verification of whether right data 404 of rightmost node 405 at current level (bottom level 401 in first iteration) is equal to null may be performed. In case of positive (or true) result of said verification, the method may continue to block 304. Otherwise, a transition to block 305 may be performed.

At block 304, right data 404 of rightmost node 405 may be updated with current data (received data unit 402 equal to '2' in Figure 4a). Once said update has been performed, the insertion of the data unit may be finalized by transitioning to block 204 (Figure 2).

At block 305, a promotable aggregation may be determined by aggregating left and right data of rightmost node at current level and, at block 306, a new rightmost node may be created (in the memory of the computer system) with left data equal to current data and right data equal to null. The expression "promotable aggregation" is used herein to indicate that said aggregation is to be promoted or propagated upwards in the forest.

Figure 4b shows an example of determining a promotable aggregation and creating (in the memory of the computer system) a new rightmost node according to blocks 305 and 306 respectively. Promotable aggregation 413 (equal to '3') results from aggregating left and right data (equal to '1' and '2' respectively) of rightmost node 405 (node 409 has not still been created) at current level (bottom level 401 in this case). Afterwards, new rightmost node 409 may be created (in the memory of the computer system) with left data 407 equal to current data (received data unit 410 equal to '1' in this case) and right data equal to 'ø' (null or neutral element).

Figure 4b shows how said promotable aggregation 413 (equal to '3') may be used in second iteration at block 304. In particular, it is shown that right data 411 of rightmost node 412 at intermediate level 406 (one level above bottom level 401) may be updated with promotable aggregation 413 (equal to '3') determined at block 305 in previous iteration.

Once promotable aggregation has been determined (at block 305) and new rightmost node has been created (at block 306), a transition to block 307 may be performed.

At block 307, a verification of whether current level is top level 400 (Figure 4a) may be performed. In case of positive (or true) result of said verification, the method may proceed to block 309. Otherwise, a transition to block 308 may be performed.

At block 308, the level above current level may be designated (or set) as current level and promotable aggregation may be designated (or set) as current data for levelling up in the forest in order to propagate the promotable aggregation upwards as many levels as required and, therefore, start a new iteration. To this end, a loop back from block 308 to block 301 may be performed.

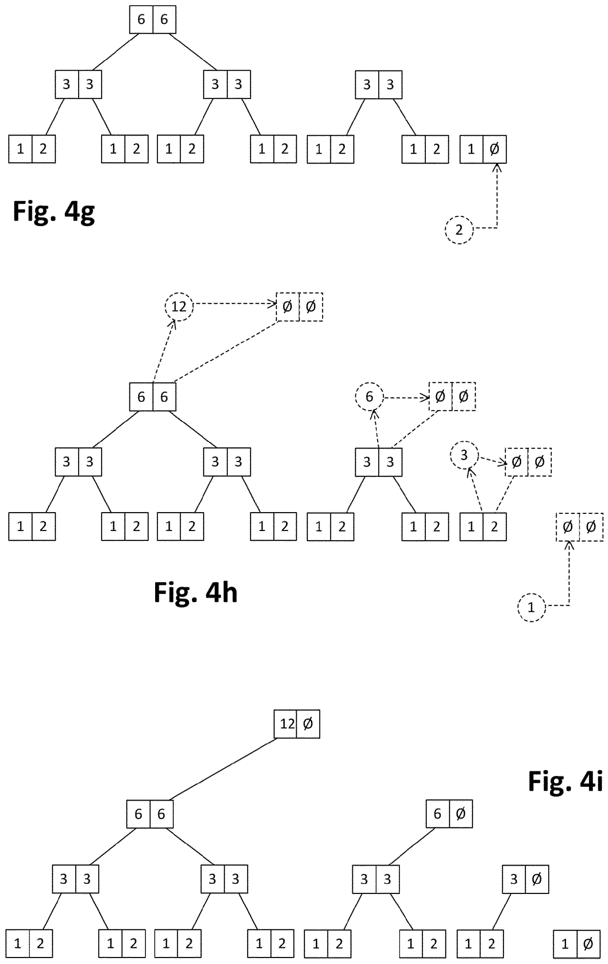

At block 309, since a second node has been created at current top level, a new node at a new top level (above current top level) may be created (in the memory of the computer system), said new node having left data equal to promotable aggregation and right data equal to null. Figure 4h shows an example of these circumstances and Figure 4i shows a "final" forest resulting from said circumstances illustrated by Figure 4h.

At least some of the Figures 4a - 4i have been slightly referred to in previous description of Figure 3 for facilitating the understanding of Figure 3. Now, a more detailed description of Figures 4a - 4i will be provided as an exemplary evolution of corresponding forest according to insertion sub-method of Figure 3 or similar.

Figure 4a shows that a new data unit 402 (from data stream) may be received and inserted as right data in rightmost node 405 at bottom level 401. Execution of the insertion sub-method may be ended because no new rightmost node has been created at current/bottom level 401, and a new execution of said sub-method may be initiated upon reception of a further data unit.

Figure 4b shows that a new data unit 410 may be received but, in this case, said data unit 410 may not be inserted in rightmost node 405 because left and right data of said node 405 are different from null. Instead of that, promotable aggregation 413 may be determined and new rightmost node 409 may be created (in the memory of the computer system). Then, new data unit 410 may be inserted as left data 407 in said new rightmost node 409, and promotable aggregation 413 may be inserted as right data 411 in rightmost node 412 at intermediate level 401 (i.e. level above bottom level 401).

This last insertion may produce a consistent parent-child relation 408 between nodes 412 and 405 in the sense that aggregation of left and right data ('1' + '2') of child node 405 is equal to right data 411 (= '3') of parent node 412. Execution of the insertion sub-method may be ended because no new rightmost node has been created at current/intermediate level 406, and a new execution of said sub-method may be initiated upon reception of a further data unit.

Figure 4c shows that a new data unit 414 may be received and inserted as right data 408 in rightmost node 409 at bottom level 401. Execution of the insertion sub-method may be ended because no new rightmost node has been created at current/bottom level 401, and a new execution of said sub-method may be initiated upon reception of a further data unit.

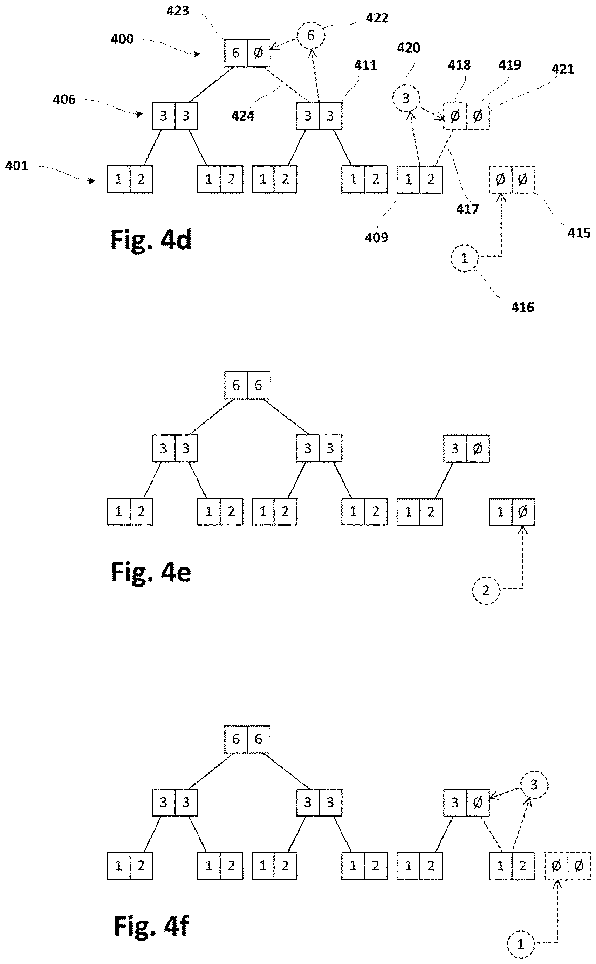

Figure 4d shows that a new data unit 416 may be received and said data unit 416 may not be inserted in rightmost node 409 because left and right data of said node 409 are different from null. Instead of that, promotable aggregation 420 may be determined and new rightmost node 415 may be created (in the memory of the computer system). Then, new data unit 416 may be inserted as left data in said new rightmost node 415. However, promotable aggregation 420 may not be inserted in rightmost node 411 at intermediate level 406 because left and right data of said node 411 are different from null.

Accordingly, another promotable aggregation 422 may be determined from node 411 at intermediate level 406 and new rightmost node 421 may be created at same intermediate level 406. Then, promotable aggregation 420 from bottom level 401 may be inserted as left data 418 in new rightmost node 421 (with right data 419 equal to null). This last insertion may produce a consistent parent-child relation 417 between nodes 421 and 409 in the sense that aggregation of left and right data ('1' + '2') of child node 409 is equal to left data 418 (= '3') of parent node 421.

Once intermediate level 406 has been "processed", a transition from current level to next level upwards in the forest may be performed in order to compute next level (top level) 400. In this case, promotable aggregation 422 from intermediate level 406 may be inserted as right data in the only existing node 423 at top level 400. This last insertion may produce a consistent parent-child relation 424 between nodes 423 and 411 in the sense that aggregation of left and right data ('3' + '3') of child node 411 is equal to right data (= '6') of parent node 423. Execution of the insertion sub-method may be then ended because no new rightmost node has been created at current/top level 400, and a new execution of said sub-method may be initiated upon reception of a further data unit.

Figures 4e - 4i show subsequent evolutions of the forest without using reference numbers because underlying principles have been sufficiently explained with reference to Figures 4a - 4d. These further evolutions of the forest are described herein in order to clearly reflect how the forest may achieve a situation in which a new top level may be created.

Figure 4e shows that new data unit (equal to '2') may be received and inserted as right data in the rightmost node at bottom level. Execution of the insertion sub-method may then be ended because no new rightmost node has been created at current/bottom level.

Figure 4f shows that new data unit (equal to '1') may be received and promotable aggregation (equal to '3') may be determined from rightmost node at bottom level (because left and right data in rightmost node are different from null). This figure also shows that new rightmost node may be created at bottom level and new data unit may be inserted as left data in new rightmost node at bottom level. It is further shown in present figure that promotable aggregation from bottom level may be inserted as right data in rightmost node at intermediate level. Execution of the insertion sub-method may then be ended because no new rightmost node has been created at current/intermediate level.

Figure 4g shows that new data unit (equal to '2') may be received and inserted as right data in the rightmost node at bottom level. Execution of the insertion sub-method may then be ended because no new rightmost node has been created at current/bottom level.

Figure 4h shows that new data unit (equal to '1') may be received and promotable aggregation (equal to '3') may be determined from rightmost node at bottom level (because left and right data in said rightmost node are different from null). This figure also shows that new rightmost node may be created at bottom level and new data unit may be inserted as left data in said new rightmost node at bottom level. It is further shown that promotable aggregation (equal to '6') may be determined from rightmost node at intermediate level (because left and right data in said rightmost node are different from null).

Figure 4h further shows that new rightmost node may be created at intermediate level and promotable aggregation from bottom level may be inserted as left data in said new rightmost node. Promotable aggregation (equal to '12') may be determined from the rightmost and only existing node at top level (because left and right data in said node are different from null). Afterwards, promotable aggregation from intermediate level may be inserted as left data in new rightmost node at top level, so that consistent parent-child relation may be defined between new rightmost node at top level and previous rightmost node at intermediate level.

Figure 4h finally shows that new node may be created at new top level and promotable aggregation from previous top level may be inserted as left data in said new node at new top level. This last insertion implies that consistent parent-child relation may be defined between new node at new top level and previous rightmost node at previous top level. Execution of the insertion sub-method may then be ended since new node has been created at new top level.

Figure 4i shows a final forest that may result from previous circumstances (evolutions) illustrated by Figures 4a - 4h. That is, the final forest may result from receiving several new data units (from data stream) and performing insertion sub-method according to Figure 3 for each of the received data units. Constructing the forest in such a manner may permit determining right partial result (block 205 of Figure 2) from rightmost nodes at non-top levels and left partial result (block 206 of Figure 2) from leftmost nodes at all the levels, as indicated below. Final result (i.e. aggregation of whole window) may be determined by aggregating said right and left partial results (block 207 of Figure 2).

Right partial result may be determined by aggregating left and right data of rightmost nodes at non-top levels:
Bottom level => '1' + 'ø'
First level above bottom level => '3' + 'ø'
Second level above bottom level => '6' + 'ø'
**Right partial result** => '1' + 'ø' + '3' + 'ø' + '6' + 'ø' = '10'.

Left partial result may be determined by aggregating the leftmost non-null data at bottom level and right data of leftmost nodes at all the levels having left and right data different from null (i.e. top-level node <12, ø> is discarded):
Bottom level => '2'
First level above bottom level => '3'
Second level above bottom level => '6'
Leftmost non-null data at bottom level => '1'
**Left partial result** => '2' + '3' + '6' + '1' = '12'.

Accordingly, **final aggregation** of whole window may be equal to '22' which results from aggregating right partial result (= '10') and left partial result (= '12').

Figure 5 is a flowchart schematically illustrating an insertion sub-method similar to the insertion sub-method of Figure 3. In particular, blocks 500 - 509 (of Figure 5) may be equal or similar to blocks 300 - 309 (of Figure 3) respectively. Figure 5 may differ from Figure 3 in blocks 510 - 512 which are aimed at incrementally updating a result node having right and left result sub-nodes for storing left and right partial results respectively. The result node may reside in the memory of the computer system.

At block 512, new data unit (received from data stream) may be aggregated to right partial result in right result sub-node and right result sub-node may be updated with said aggregation. This implies that right result sub-node may be incrementally updated as new data units are received and inserted in the forest.

At block 510, a verification of whether only existing node at top level has been updated (at block 504) may be performed. In case of positive (or true) result of said verification, a transition to block 511 may be performed. Otherwise, the sub-method may be finalized and may proceed to e.g. block 204 (if no more insertions are to be performed).

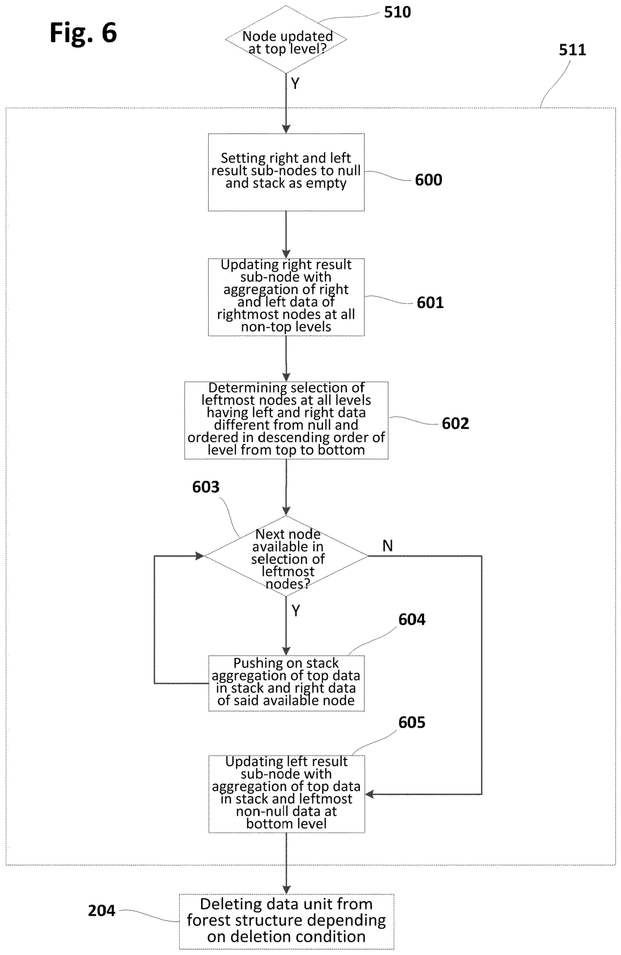

At block 511, right and left partial results in right and left result sub-nodes may be determined from scratch, in a similar way as previously described with reference to Figure 4i. In particular, right partial result may be determined by aggregating left and right data of rightmost nodes at non-top levels of the forest. Left partial result may be determined by aggregating leftmost non-null data at bottom level and right data of leftmost nodes having left and right data different from null at all the levels of the forest. Figure 6 illustrates a sub-method of example for determining right and left partial results from scratch (by inspecting rightmost nodes at non-top levels and leftmost nodes at all the levels).

Once block 511 has been completed, the sub-method may be finalized or may be repeated in order to insert a new data unit received from data stream. If the sub-method is finalized, a transition to e.g. block 204 may be performed.

If right result sub-node has been updated according to proposed sub-method, right partial result may be directly retrieved from result node (at block 205 of Figure 2). Similarly, if left result sub-node has been updated according to proposed sub-method, left partial result may be directly retrieved from left result sub-node (at block 206 of Figure 2). This may cause that at least some methods according to the present disclosure may be more efficient in terms of optimal use of computational resources.

### Partial results generation

Figure 6 is a flowchart schematically illustrating an example of sub-method implementing block 511 (of Figure 5) for determining right and left partial results from scratch. In this example, a stack is used to store partial aggregations corresponding to left partial result (or aggregation). This stack may reside in the memory of the computer system.

At block 600, right and left result sub-nodes may be initialized to null (or neutral element) and stack may be initialized to empty. Then, the sub-method may proceed to next block 601.

At block 601, right result sub-node may be updated with aggregation of left and right data of rightmost nodes at all non-top levels. Then, the sub-method may proceed to next block 602.

At block 602, a selection of leftmost nodes with left and right data different from null at all levels of the forest may be determined. Said selection may be ordered in descending (top-down) order of level. Then, a transition to next block 603 may be performed.

At block 603, a verification of whether a next node is available (i.e. not yet processed) in the selection of leftmost nodes may be performed. In first iteration, next available node may be first node in the selection (if not empty). In case of positive (or true) result of said verification, the sub-method may proceed to block 604. Otherwise, a transition to block 605 may be performed.

At block 604, an aggregation of top data in the stack and right data of said next node from the selection may be determined. Then, said aggregation may be pushed on the stack to keep track of corresponding partial aggregation at leftmost region of the forest. In the case that stack is empty, top data in the stack may be assumed as null (or neutral element). Once stack has been accordingly updated, the sub-method may loop back to previous block 603 in order to process next available node (if it exists) in the selection.

At block 605, an aggregation of top data in the stack and leftmost non-null data at bottom level may be determined. Then, left result sub-node may be updated with said aggregation which corresponds to left partial result or aggregation. In the case that stack is empty, top data in the stack may be assumed as null (or neutral element). The leftmost non-null data at bottom level may be e.g. left data in leftmost node at bottom level if said left data is not null, or right data in leftmost node at bottom level if said right data is not null and left data is null. Once the left result sub-node has been updated the sub-method may be finalized by transitioning from block 605 to e.g. block 204 of Figure 2 or similar.

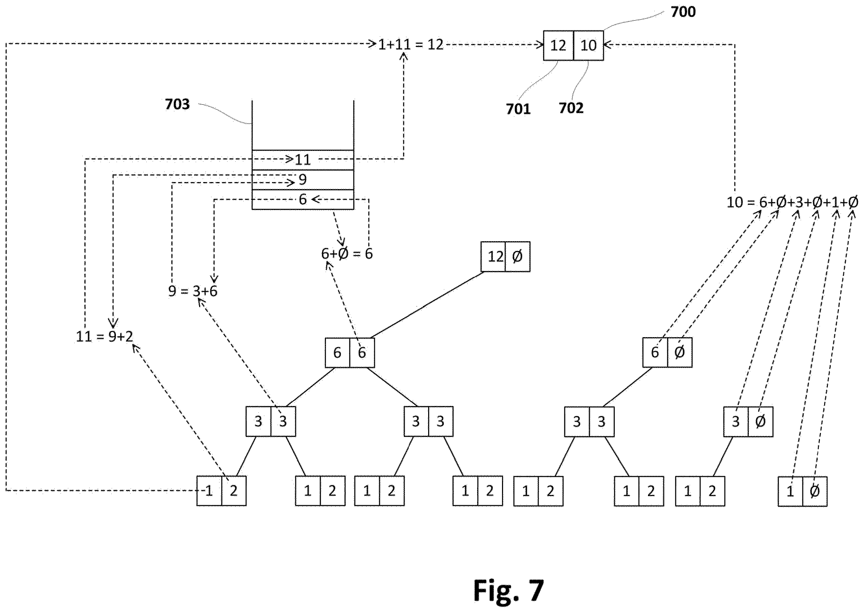

Figure 7 shows the forest of Figure 4i along with corresponding result node 700 and stack 703 updated according to sub-method of Figure 6. Left partial result may be determined by retrieving it from left result sub-node 701 in result node 700 (block 206 of Figure 2). Right partial result may be determined by retrieving it from right result sub-node 702 in result node 700 (block 205 of Figure 2). Final result (or aggregation) may be determined by aggregating the retrieved left and right partial results (block 207 of Figure 2).

### Removal

Figure 8 is a flowchart schematically illustrating a sub-method of deleting a data unit from a forest structure implementing a sliding window in the context of a method such as the one shown in Figure 2 or similar.

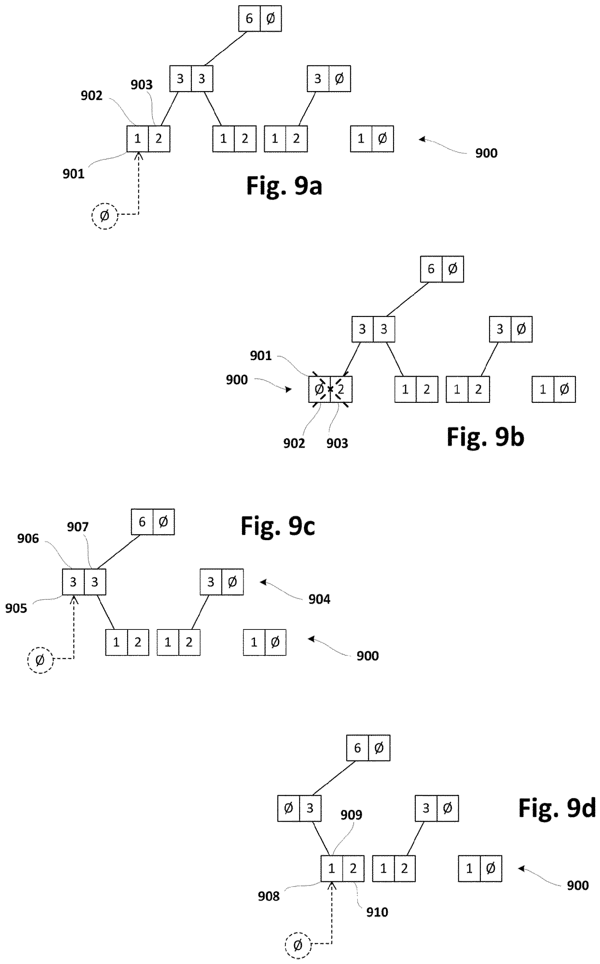

Figures 9a - 9h schematically illustrate a forest structure and its evolution due to deletion of data units performed in same or similar way as indicated in Figure 8. Symbol 'ø' is utilized in Figures 9a - 9h to indicate null or neutral element of corresponding monoid used to perform aggregations. For the sake of understanding, number references from Figures 9a - 9h may be used in following description of Figure 8.

At block 800, bottom level may be designated (or set) as current level and, then, a transition to next block 801 may be performed. In the example of Figure 9a, bottom level is indicated with number reference 900.

At block 801, a verification of whether leftmost non-null data at current/bottom level satisfies a predefined deletion condition may be performed. In case of positive (or true) result of said verification, the sub-method may proceed to block 802. Otherwise, the sub-method may continue to block 807 for causing termination of the sub-method.

In the example of Figure 9a, leftmost non-null data at bottom level corresponds to left data 902 of leftmost node 901 (equal to '1'). In the example of Figure 9b, leftmost non-null data at bottom level corresponds to right data 903 of leftmost node 901 (equal to '2') since its left data 901 is null.

A predefined deletion condition may comprise e.g. compliance that number of aggregated updates (received data units) in the window cannot exceed a maximum number of updates. That is, a count excess (with respect said maximum) may be reduced to zero in order to cause satisfaction of the deletion condition. In order to implement that, a dimension of the aggregation could be a count of updates. If count value in a considered partial aggregation is less or equal than the count excess in the whole window aggregation, data in the window corresponding to said partial aggregation may be removed according to deletion condition.

Another deletion condition may comprise compliance that aggregated updates (received data units) in the window cannot be outside a specific lapse of time such as e.g. an hour. To this end, each received data unit may include a timestamp corresponding to when the data unit has been produced. A dimension of the aggregation could be a timestamp maximum, so that if the timestamp value in a considered partial aggregation is older than the lapse of time specified by the deletion condition, data in the window corresponding to said partial aggregation may be removed according to deletion condition.

At block 802, once it has been determined (at block 801) that leftmost non-null data at bottom level satisfies deletion condition, a verification of whether left and right data of the leftmost node at current level are not null may be performed. In case of positive (or true) result of said verification, the sub-method may proceed to block 803. Otherwise, a transition to block 804 may be performed.

In the example of Figure 9a, the verification of block 802 may produce positive (or true) result since both left and right data 902, 903 of the leftmost node 901 (at bottom level 900) are different from null. In the example of Figure 9b, the verification of block 802 may produce negative (or false) result since left data 902 of the leftmost node 901 (at bottom level 900) is null.

At block 803, once it has been determined (at block 802) that left and right data of leftmost node at current level are not null, left data of the leftmost node at current level may be updated with null. Then, the sub-method may loop back to block 800 in order to initiate a new iteration starting again from bottom level. Figure 9a shows that left data 902 of leftmost node 901 at bottom level 900 is updated with null (according to block 803), and Figure 9c shows that left data 906 of leftmost node 905 at intermediate level 904 is updated with null (according to block 803).

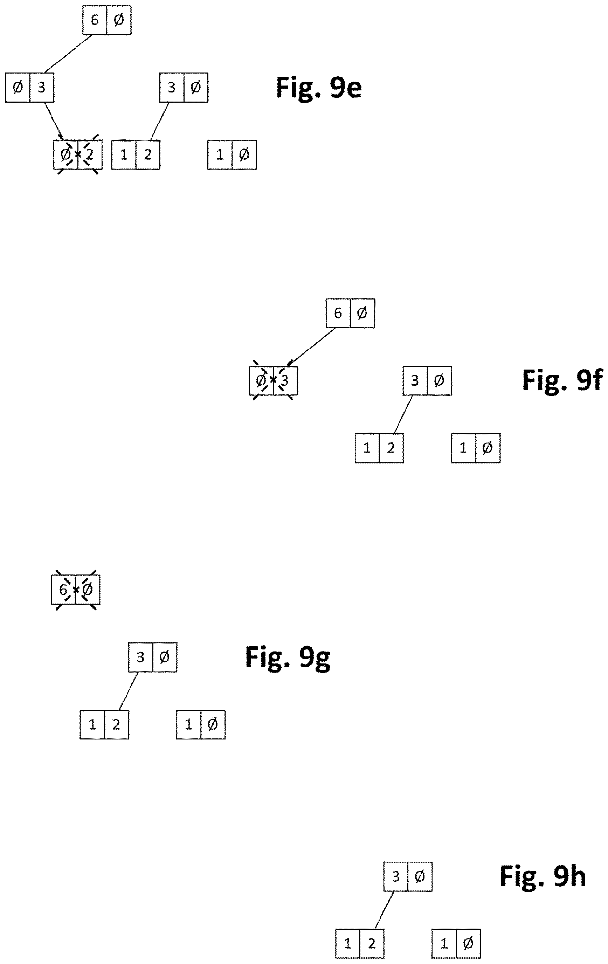

At block 804, once it has been determined (at block 802) that left data of the leftmost node at current level is null, leftmost node at current level may be deleted. Then, a transition to block 805 may be performed in order to verify whether the deleted node corresponds to top level. Figure 9b shows that leftmost node 901 at bottom level 900 is deleted (according to block 804) because left data 902 of said node is null. Figure 9f shows that leftmost node at intermediate level is deleted (according to block 804) because left data of said node is null.

At block 805, once leftmost node at current level has been deleted, a verification of whether said deleted node corresponds to top level may be performed. In case of positive (or true) result of said verification (node deleted at top level), the sub-method may loop back to block 800 in order to initiate a new iteration starting again from bottom level. Otherwise (node deleted at non-top level), a transition to block 806 may be performed for levelling up in the forest.

At block 806, once it has been verified that the deleted node does not correspond to top level, the level above current level may be designated as current level, i.e. a transition from current level to next level upwards in the forest may be performed. Then, the sub-method may loop back to block 802 in order to initiate a new iteration for inspecting the leftmost node at said next level upwards (block 802) and updating its left data with null (block 803) or deleting it (block 804) depending on whether its left and right data are null or not.

At least some of the Figures 9a - 9h have been slightly referred to in previous description of Figure 8 for facilitating the understanding of Figure 8. Now, a more detailed description of Figures 9a - 9h will be provided as an exemplary evolution of corresponding forest according to deletion sub-method of Figure 8 or similar.

Figure 9a shows that left and right data 902, 903 of the leftmost node 901 at bottom level are not null and, therefore, left data 902 of said leftmost node 901 may be updated with null.

Figure 9b illustrates that a new iteration may be initiated starting again from bottom level because left data 902 of node 901 has been updated with null (see Figure 9a). It is also shown that leftmost node 901 at bottom level 900 may be deleted because its left data 902 is null.

Figure 9c shows that a transition from bottom level 900 to next level upwards (intermediate level) 904 may be performed because leftmost node 901 at bottom level 900 has been deleted and said deletion has not been performed at top level (see Figure 9b). It is further shown that left data 906 of leftmost node 905 at intermediate level 904 may be updated with null because its left and right data 906, 907 are not null.

Figure 9d shows that a new iteration may be initiated starting again from bottom level because left data 906 of node 905 has been updated (see Figure 9c). It is further shown that left data 909 of leftmost node 908 at bottom level 900 may be updated with null because left and right data 909, 910 of said leftmost node 908 are not null.

Figures 9e - 12h illustrate subsequent evolutions of the forest without using reference numbers because underlying principles have been sufficiently explained with reference to Figures 9a - 9d. These further evolutions of the forest are described herein in order to clearly reflect how the forest may achieve a situation that may result from deleting a node at top level.

Figure 9e illustrates that a new iteration may be initiated starting again from bottom level because left data 909 of node 908 has been updated with null (see Figure 9d). It is also shown that leftmost node at bottom level may be deleted because its left data is null.

Figure 9f shows that a transition from bottom level to next level upwards (i.e. intermediate level) may be performed because leftmost node at bottom level has been deleted and said deletion has not been performed at top level (see Figure 9e). It is further shown that leftmost node at said intermediate level may also be eliminated because its left data is null.

Figure 9g shows that a transition from intermediate level to next level upwards (i.e. top level) may be performed because leftmost node at intermediate level has been deleted and said deletion has not been performed at top level (see Figure 9f). It is further shown that leftmost node at top level may also be eliminated because its right data is null.

Figure 9h illustrates that a new iteration may be initiated starting again from bottom level because deletion at top level has been performed. It is also shown that deletion sub-method may be terminated because deletion condition is not satisfied by left data of leftmost node at bottom level. In this case, the deletion condition may restrict the number of received data units (at bottom level) to a maximum of three data units. Since the number of left/right data at bottom level different from null is three ('1', '2', '1'), the deletion condition is satisfied and, hence, the deletion sub-method may be terminated.

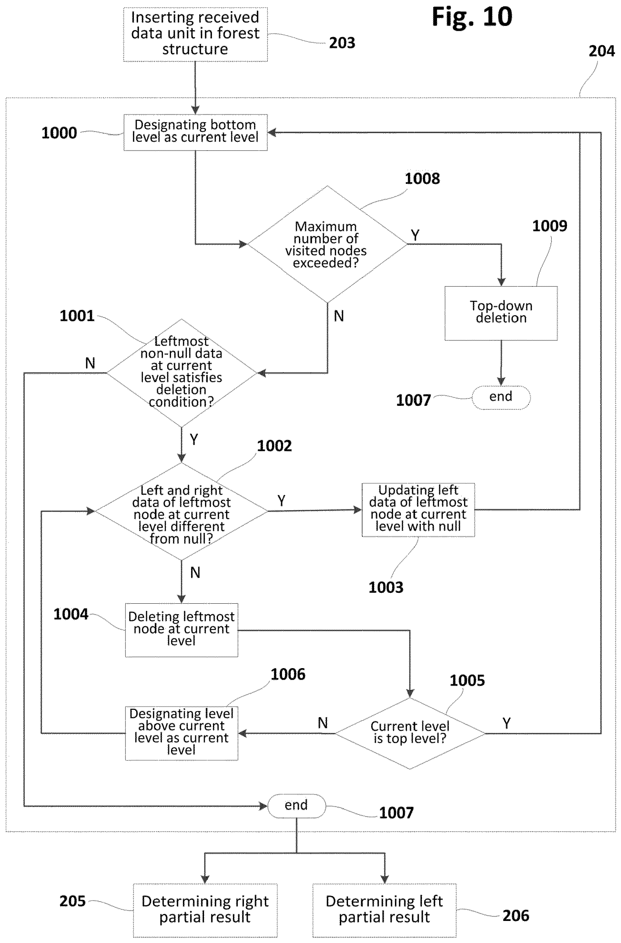

Figure 10 is a flowchart schematically illustrating a deletion sub-method similar to the deletion sub-method of Figure 8. In particular, blocks 1000 - 1007 (of Figure 10) may be equal or similar to blocks 800 - 807 (of Figure 8) respectively. Figure 10 may differ from Figure 8 in blocks 1008, 1009 which are aimed at changing the modality under which nodes are being deleted. This change may cause e.g. a transition from one by one deletion mode (blocks 1000 - 1007) to massive (top-down) deletion mode (block 1009).

At block 1008, a verification of whether a maximum number of visited (or inspected) nodes has been reached or exceeded may be performed. In case of positive (or true) result of said verification, deletion sub-method may continue to block 1009 for changing deletion modality from one by one deletion to massive (top-down) deletion. Otherwise, a transition to block 1001 may be performed for continuing deletion of nodes under one by one deletion modality. The maximum number of visited (or inspected) nodes may be a predefined maximum that may e.g. be proportional to the number of levels of current forest. That is to say, predefined maximum may be equal to e.g. N * L, wherein L is the number of levels of current forest and N is a predefined number equal or greater than 1.

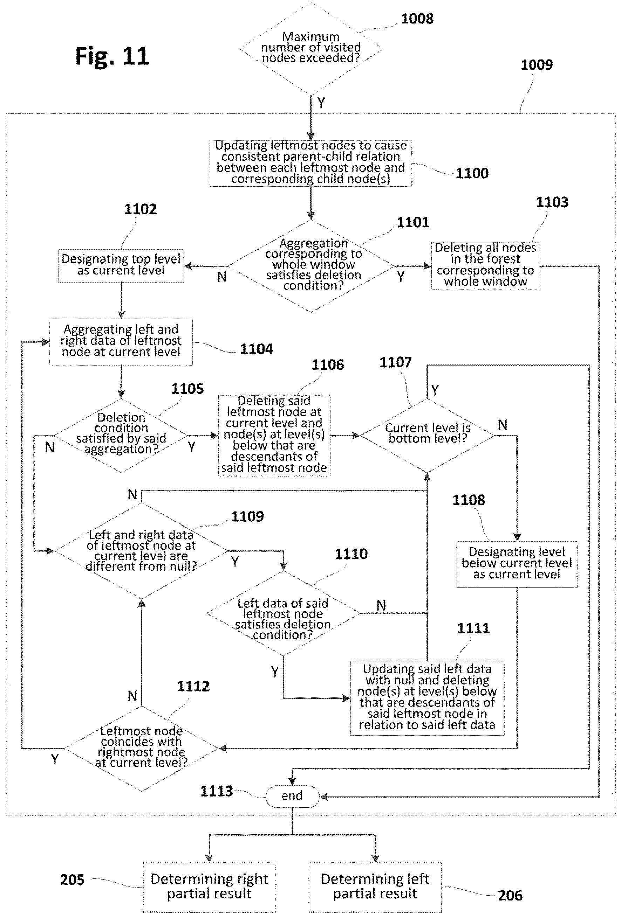

At block 1009, a massive top-down deletion may be performed according to e.g. deletion sub-method illustrated by Figure 11. This change to massive deletion mode may thus be performed when one by one deletion mode is estimated to likely be inefficient (e.g. when predefined maximum of inspected nodes has been exceeded). This approach may generally improve efficiency of deletion sub-method and, therefore, cause a more optimal use of computational resources. Once massive top-down deletion has been completed, a transition to final block 1007 may be undertaken.

Figure 11 is a flowchart schematically illustrating other examples of deleting data unit(s) from a forest structure implementing a sliding window in the context of a method such as the one shown in Figure 2 or similar. In this case, a massive (top/down) deletion sub-method is proposed in order to e.g. compensate for anticipated possible inefficiencies derived from one by one deletion. In this particular approach, the forest may be seen as a sequence of partial aggregations (implemented in the forest/window) that may be inspected from largest to smallest, and finally excluded or not (from the forest/window) depending on whether said inspection results in satisfaction of the deletion condition by corresponding partial aggregation. Exclusion of a given partial aggregation (in the forest/window) may be performed by deleting all nodes of sub-forest structure corresponding to said partial aggregation.

As defined in other parts of the description, deletion condition may correspond to a restricted count of existing updates (or data units) in the window, a restricted lapse of production time of updates (or data units) in the window, etc.

At block 1100, leftmost nodes of the forest may be inspected and (if necessary) updated for causing consistent parent-child relations (as defined in other parts of the description) between each of the leftmost nodes and corresponding child node(s). This inspection (and update if needed) of leftmost nodes may be aimed at e.g. correcting possible parent-child inconsistencies derived from previous one by one deletion.

At block 1101, a verification of whether aggregation corresponding to whole window satisfies deletion condition may be performed. Aggregation corresponding to whole window may be seen as first partial aggregation in the abovementioned sequence of (largest to smallest) partial aggregations. In case of positive (or true) result of said verification, the sub-method may continue to block 1103 for deleting all nodes corresponding to said largest aggregation. Otherwise, the sub-method may proceed to block 1102 for transitioning to next partial aggregation in the sequence of partial aggregations. Aggregation corresponding to whole window may be determined in any of the manners described in present disclosure. For example, in implementations including result node incrementally updated, the aggregation corresponding to whole window may be determined by aggregating left and right partial results from result node.

At block 1103, all the nodes in the forest (corresponding to whole window) may be deleted since it has been determined (at block 1101) that aggregation corresponding to whole window satisfies deletion condition. Once all nodes have been deleted, a transition to final block 1113 may be performed for terminating the sub-method.

At block 1102, top level may be designated as current level for initiating corresponding computations along the sequence of partial aggregations starting from top level.

At block 1104, left and right data of leftmost node at current level may be aggregated, said aggregation corresponding to next partial aggregation in the sequence of partial aggregations. This step may thus be seen as a transition to next partial aggregation corresponding to whole leftmost node at current/top level.

At block 1105, it may be verified whether said partial aggregation (corresponding to whole leftmost node at current level) satisfies deletion condition. In case of positive (or true) result of said verification, the sub-method may continue to block 1106 for deleting all nodes corresponding to said partial aggregation. Otherwise, the sub-method may proceed to block 1109 for transitioning to next partial aggregation.

At block 1106, leftmost node at current level (corresponding to partial aggregation determined at block 1104) may be deleted along with nodes at levels below current level that are descendants of said leftmost node. Descendant nodes of a particular node may be defined as those nodes included in any sub-tree hanging from said particular node. This "massive" deletion of nodes may be implemented in different manners, such as e.g. by marking nodes as deleted so that a background process may physically eliminate them under more favourable computational conditions. For example, execution of background process may be differed to when computational load is below a threshold, or background process may be run by an auxiliary computer system, etc. In the case that nodes to be eliminated are simply marked as deleted, the proposed sub-method may comprise ignoring said marked nodes as if they did not exist in the forest.

At block 1109, it may be verified whether left and right data of leftmost node at current level are not null. In case of positive (or true) result of said verification, it means that next partial aggregation corresponds to left data of said leftmost node and, hence, transition to block 1110 may be performed. Otherwise, it means that no other partial aggregation may be determined from said leftmost node (partial aggregation corresponding to aggregation of left and right data of said leftmost node has already been determined at block 1104). In this case, transition to block 1107 may thus be performed for transitioning to next level downwards if bottom level has not still been reached.

At block 1110, it may be verified whether left data of leftmost node at current level satisfies deletion condition. In case of positive (or true) result of said verification, the sub-method may proceed to block 1111 for eliminating partial aggregation corresponding to left data of said leftmost node. Otherwise, transition to block 1107 may be performed for transitioning to next level downwards if bottom level has not still been reached.

At block 1111, partial aggregation corresponding to left data of leftmost node at current level may be eliminated by updating said left data with null and deleting nodes at levels below current level that are descendants of said nulled left data. Descendant nodes of a particular data of a given node may be defined as those nodes included in a sub-tree hanging from said particular data of the given node. This "massive" deletion of nodes may be implemented in different manners according to e.g. the principles commented with respect to block 1106.

At block 1107, a verification of whether current level is bottom level may be performed. In case of positive/true result of said verification (i.e. bottom level has been reached), the sub-method may be terminated by proceeding to final block 1113. Otherwise, the sub-method may continue to block 1108 for transitioning to next level downwards in the forest. To this end, level below current level may be designated (or set) as current level at block 1108. Then, the sub-method may continue to block 1112 for transitioning to next partial aggregation in the forest/window.

At block 1112, it may be verified whether transition to next level downwards in the forest (performed at block 1108) has caused transition to new top level because previous deletions have eliminated prior top level. This verification may be performed by determining whether leftmost node coincides with rightmost node at current level (as indicated in the figure). In case of positive/true result of said verification (current level is new top level), the sub-method may loop back to block 1104 for transitioning to next partial aggregation corresponding to leftmost node at (new) top level. Otherwise (current level is not new top level), the sub-method may loop back to block 1109 for transitioning to next partial aggregation corresponding to leftmost node at the non-top level to which block 1108 has transitioned downwards in the forest.

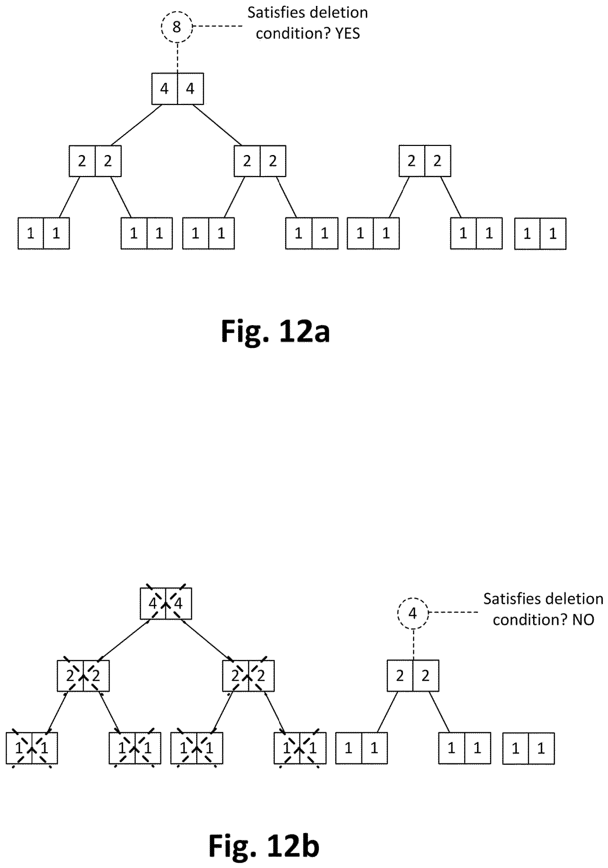

Figures 12a - 12e show a window/forest and its evolution due to execution of a "massive" deletion sub-method such as the one of Figure 11 or similar.

Figure 12a shows a forest structure that may have been constructed by performing a method according to the present disclosure. Figures 12b - 12e illustrate evolutions of said forest/window due to massive deletions performed according to sub-method of Figure 11 or similar.

In Figure 12a, it is assumed that aggregation corresponding to whole window does not satisfy deletion condition (block 1101) and, hence, first iteration starting from top level may be initiated (block 1102). Then, transition to next partial aggregation in the window may be performed by aggregating left and right data of leftmost node at current/top level: '4' + '4' = '8' (block 1104).

Next, it may be determined that said partial aggregation ('4' + '4' = '8') satisfies deletion condition (block 1105), in which case transition to block 1106 may be performed for deleting all nodes corresponding to said partial aggregation. Figure 12b shows such a deletion comprising removal of leftmost node at current/top level <'4', '4'> and deletion of nodes at levels below that are descendants of said leftmost node (block 1106).

Figure 12b further shows that progression to next partial aggregation may be performed as follows. It may be verified that current level is not bottom level (block 1107), in which case transition to next level downwards in the forest may be executed (block 1108). Then, it may be verified that new level to which the sub-method has transitioned is top level as a result of previous deletions (block 1112), in which case a loop back to block 1104 may be performed for initiating new iteration starting again from top level.

Figure 12b also shows that, according to previous circumstances, next partial aggregation may correspond to aggregation of left and right data of leftmost node at top level: '2' + '2' = '4' (block 1104), which may be assumed as not satisfying the deletion condition (so indicated in the figure). Dissatisfaction of the deletion condition may thus be confirmed (block 1105). Next, it may be confirmed that left and right data of leftmost node at current/top level <'2', '2'> are not null (block 1109).

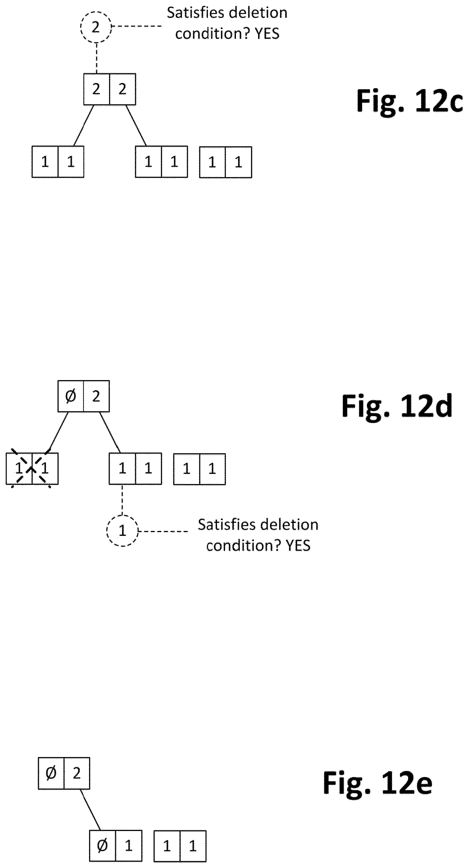

Afterwards, it may be determined that left data '2' of leftmost node at current/top level <'2', '2'> satisfies deletion condition (block 1110) according to assumption indicated in Figure 12c. Next, since said left data '2' satisfies deletion condition, it may updated with null and nodes that are descendants of said leftmost node <'2', '2'> in relation to its left data '2' may be deleted (block 1111). Figure 12d shows such update of left data '2' with null 'ø' and corresponding deletion of descendant node <'1', '1'>.

Figure 12d also shows transition to next partial aggregation based on that current/top level is not bottom level (block 1107), transition to next level downwards (bottom level) has been performed (block 1108), bottom level is not top level (block 1112), and left and right data of leftmost node at bottom level are not null (block 1109). According to these circumstances, next partial aggregation corresponds to left data '1' of leftmost node at bottom level <'1', '1'>, which is assumed to satisfy the deletion condition (as indicated in the figure).

Once said left data '1' of leftmost node at bottom level <'1', '1'> has been confirmed to satisfy deletion condition (block 1110), said left data '1' may be updated with null 'ø' (block 1111), as illustrated in Figure 12e. Finally, since current level is bottom level (block 1107) the sub-method may be terminated (block 1113).

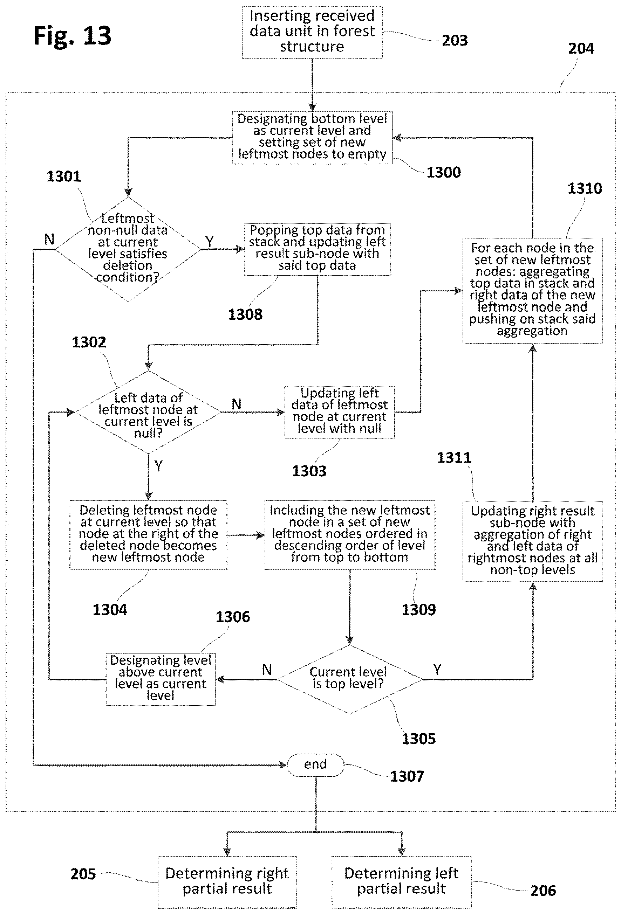

Figure 13 is a flowchart schematically illustrating a deletion sub-method similar to the deletion sub-method of Figure 8. In particular, blocks 1300 - 1307 (of Figure 13) may be equal or similar to blocks 800 - 807 (of Figure 8) respectively. Figure 13 may differ from Figure 8 in blocks 1308 - 1311 which are aimed at incrementally updating a result node including pre-calculated right and left partial results. Said right and left partial results may be understood as partial aggregations corresponding to respective right and left portions of the forest whose combination results in the whole forest. Another difference between Figure 13 and Figure 8 may be that, in the former, block 1300 further includes initializing a set of new leftmost nodes to empty.

As illustrated in Figure 13, a stack may be used to efficiently update left partial result in result node. This stack may have been previously updated according to sub-methods described in present disclosure (see e.g. Figure 6 and corresponding description). Deletion of nodes according to Figure 13 (or similar) may permit determining left and right partial results by retrieving them from result node (blocks 205 and 206 of Figure 2). Final result (or aggregation) may thus be determined by aggregating said retrieved left and right partial results (block 207 of Figure 2).

At block 1308, top data in stack may be popped from the stack and left result sub-node (in result node) may be updated with said top data, once it has been confirmed (at block 1301) that leftmost non-null data at current/bottom level satisfies corresponding deletion condition. The different manners in which the stack can be updated that are described in present disclosure provoke that top data in the stack always coincides with partial aggregation corresponding to left portion of the forest (as previously defined) without the leftmost non-null data that is to be deleted (since it satisfies deletion condition). In other words, top data in the stack corresponds to current left partial result without including the leftmost non-null data (at bottom level) that is to be deleted.

As defined in other parts of the description, deletion condition may correspond to a restricted count of existing updates (or data units) in the window, a restricted lapse of production time of updates (or data units) in the window, etc.

At block 1309, once leftmost node at current level has been deleted (at block 1304) and, therefore, node at the right of the deleted node has become new leftmost node, said new leftmost node may be included in the set of new leftmost nodes. This set may be ordered in descending (top-down) order of level. This ordered set of new leftmost nodes will permit updating the stack (at block 1310) in such a way that top data in the stack always corresponds to current left partial result without including the leftmost non-null data at bottom level to be deleted (or to be set to null). Once block 1309 has been completed, the sub-method may continue to block 1305.

At block 1311, if single node at top level of the forest has been deleted and, therefore, a new iteration is to be performed starting again from bottom level, right result sub-node (in result node) may be updated with aggregation of right and left data of rightmost nodes at non-top levels. Hence, right partial result is corrected with consistent value only when partial aggregation corresponding to the right portion of the forest (as defined above) may have been distorted, i.e. when single node at top level has been deleted. Once right partial result has been corrected in result node, the sub-method may proceed to block 1310.

At block 1310, once left data of leftmost node at current level has been updated with null or right partial result has been corrected in result node, the stack may be updated depending on which new leftmost nodes have resulted in previous iterations. To this end, nodes in the set of new leftmost nodes (updated at block 1303) may be processed from first to last in descending (top-down) order of level (as defined with reference to block 1309). In particular, for each of the new leftmost nodes in the set (from first to last) an aggregation of top data in stack and right data in the new leftmost node may be determined, and said aggregation may be pushed on the stack. This way, track of new leftmost nodes that have resulted from deleting corresponding previous leftmost nodes is kept in the stack, in such a way that top data in the stack always corresponds to current left partial result without including the leftmost non-null data to be deleted (or to be set to null) at bottom level. Once stack has been suitably updated, a transition to block 1300 may be performed in order to initiate a new iteration starting again from bottom level.

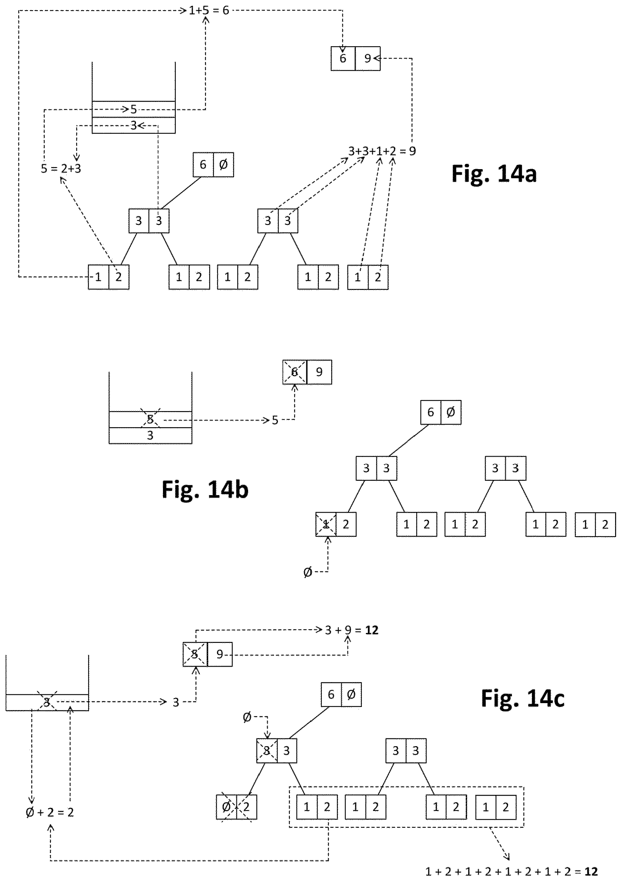

Figures 14a - 14c show a window with corresponding forest, result node and stack and their evolution due to execution of a deletion sub-method such as the one of Figure 13 or similar. Figure 14a illustrates an initial window resulting from executing a method according to the present disclosure. Result node is shown with left partial result equal to '6' and right partial result equal to '9'.

Right partial result may have been determined from an aggregation of left and right data of rightmost nodes at non-top levels. In the particular case illustrated, right partial result may correspond to an aggregation of a first aggregation '1' + '2' (left and right data in rightmost node at bottom level) and a second aggregation '3' + '3' (left and right data in rightmost node at intermediate level). Accordingly, right partial result '9' may result from the aggregation '1' + '2' + '3' + '3' = '9'. As described in other parts of the disclosure, right partial result may have been determined incrementally during insertion of received data units in the window/forest.

Left partial result '6' may have been determined from an aggregation of top data in stack '5' and leftmost non-null data at bottom level '1' ('1' + '5' = '6'). Top data in stack '5' may have been determined by aggregating right data of leftmost node at bottom level '2' and previous top data in stack '3' ('5' = '2' + '3'). Said previous top data in stack '3' may have been determined by aggregating right data of leftmost node at intermediate level '3' and initial top data in stack 'ø' (stack was empty at this point, which implies that top data was 'ø') ('3' = '3' + 'ø'). Only leftmost nodes at bottom and intermediate levels have been considered in these calculations because said nodes have left and right data different from null or 'ø'. Node at top level has not been considered because said node has one of the left and right data different from null (left data = '6' and right data = 'ø').

Figure 14b shows an evolution of the forest from previous Figure 14a according to principles of deletion sub-method according to Figure 13. It may be verified, at block 1301, that leftmost non-null data (i.e. left data of leftmost node '1') at current/bottom level satisfies deletion condition. Then, at block 1308, top data in stack '5' may be popped from the stack and left partial result in result node may be updated with said top data '5'. Afterwards, it may be verified, at block 1302, that left data of leftmost node at current/bottom level is not null, in which case said left data may be updated with null 'ø' at block 1303. Next, since no new leftmost node has arisen because no complete leftmost node has been deleted and, therefore, set of new leftmost nodes is empty, nothing may be done according to block 1310. A loop back to block 1300 may then be performed for initiating new iteration starting again from bottom level.

Figure 14c shows an evolution of the forest from previous Figure 14b according to principles of same deletion sub-method. It may be verified, at block 1301, that leftmost non-null data (i.e. right data of leftmost node '2') at current/bottom level satisfies deletion condition. Then, at block 1308, top data in stack '3' may be popped from the stack and left partial result in result node may be updated with said top data '3'. Afterwards, it may be verified, at block 1302, that left data of leftmost node at current/bottom level is null, in which case said leftmost node may be deleted at block 1304, so that next node at the right of the deleted node becomes new leftmost node. Next, said new leftmost node <'1','2'> may be included, at block 1309, in set of new leftmost nodes. Then, at block 1305, it may be verified that current level is not top level, in which case a transition to next level upwards may be performed at block 1306. A loop back to block 1302 may be performed in order to start new iteration at said next level upwards (intermediate level).

At block 1302, it may be verified that left data of leftmost node at current/intermediate level is not null, in which case said left data may be updated with null 'ø'. Next, the only element that has been included in the set of new leftmost nodes (at block 1309 in previous iteration) may be processed according to block 1310. In particular, aggregation of top data in stack (= 'ø' because stack is empty at this point) and right data of said new leftmost node '2' may be determined, and said aggregation ('ø' + '2' = '2') may be pushed on the stack. A loop back to block 1300 may be then performed for initiating new iteration starting again from bottom level.

Figure 14c further shows that, after several deletions as described above, final aggregation of whole window ('1' + '2' + '1' + '2' + '1' + '2' + '1' + '2' = '12') may be determined by aggregating left partial result '3' and right partial result '9' ('3' + '9' = '12').

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by the claims that follow.

## Claims

1. A computer system (128) for distributed storage of data structured as a forest of balanced trees of one or more nodes, each node including a plurality of data-elements, and the forest comprising a plurality of levels including a top level and a bottom or leaf level; wherein
the nodes in the forest comprise first end nodes at a first side of the forest, second end nodes at a second side of the forest, and intermediate nodes between the first and second end nodes; wherein
the first end nodes correspond to leftmost nodes and the second end nodes correspond to rightmost nodes, or the first end nodes correspond to rightmost nodes and the second end nodes correspond to leftmost nodes; and wherein
the computer system comprises:
an execution memory (129) to store at least the first and second end nodes:
a connector (131) to implement a connection with a storage system (132) configured to store at least some of the intermediate nodes that are not stored in the execution memory, so that exchange of nodes with the storage system is performed through said connection;
a processor (130) to update the nodes stored in the execution memory according to updating criteria, and to exchange nodes with the storage system through the connection according to exchange criteria.

2. A computer system according to claim 1, wherein the storage system is external to the computer system and located at a remote site with respect to the computer system.

3. A computer system according to any of claims 1 or 2, wherein the execution memory is configured to further store a first number of consecutive intermediate nodes neighbouring the first end node, and a second number of consecutive intermediate nodes neighbouring the second end node, at each of those levels exceeding a predefined number of nodes.

4. A computer system according to any of claims 1 to 3, wherein each of the first end nodes is a root node of a tree in the forest.

5. A computer system according to any of claims 1 to 4, wherein the updating criteria comprises using an aggregation function including associativity and a neutral or null element; and wherein all data-elements in all intermediate nodes are different from null.

6. A computer system according to claim 5, wherein each of the first end nodes at non-top levels either has all data-elements different from null, or has consecutive data-elements different from null and consecutive data-elements equal to null, the non-null data-elements being farther and the null data-elements being closer with respect to the first side of the forest.

7. A computer system according to any of claims 5 or 6, wherein each of the second end nodes at non-top levels either has all data-elements different from null, or has consecutive data-elements different from null and consecutive data-elements equal to null, the non-null data-elements being farther and the null data-elements being closer with respect to the second side of the forest.

8. A computer system according to any of claims 5 to 7, wherein the forest is updated using a streaming application, the streaming application being based on a data stream providing data units to be aggregated in a sliding window; and wherein non-null data-elements in nodes at the bottom level correspond to data units received from the data stream, and aggregation of said non-null data-elements corresponds to final aggregation of the sliding window.

9. A computer system according to claim 8, wherein non-null data-elements in nodes at non-bottom levels correspond to partial aggregations of the sliding window.

10. A computer system according to claim 9, wherein non-null data-elements in intermediate nodes correspond to partial aggregations that are included in partial aggregations corresponding to non-null data-elements in end nodes; and wherein aggregation of at least some of the non-null data-elements in end nodes corresponds to final aggregation of the sliding window.

11. A system for distributed storage of data structured as a forest of balanced trees, the system comprising the computer system (128) according to any of claims 1 to 10, and a storage system (132) including a connector (134) and a memory (133) to store at least some of the intermediate nodes that are not stored in the computer system, wherein the computer system and storage system are connectable with each other through a connection between the connector (131) of the computer system and the connector of the storage system.

12. A method of updating distributed data structured as a forest of balanced trees of one or more nodes, each node including a plurality of data-elements, and the forest comprising a plurality of levels including a top level and a bottom or leaf level; wherein
the nodes in the forest comprise first end nodes at a first side of the forest, second end nodes at a second side of the forest, and intermediate nodes between the first and second end nodes; wherein
the first end nodes correspond to leftmost nodes and the second end nodes correspond to rightmost nodes, or the first end nodes correspond to rightmost nodes and the second end nodes correspond to leftmost nodes; and wherein the method comprises:
storing, by a processor of a computer system, at least the first and second end nodes into an execution memory of the computer system;
updating, by the processor, the nodes stored in the execution memory according to updating criteria;
exchanging, by the processor, nodes with a storage system through a connection according to exchange criteria, the storage system being configured to store at least some of the intermediate nodes that are not stored in the execution memory, and the connection being implemented through a connector of the computer system.

13. A method according to claim 12, wherein the forest is updated using a streaming application, the streaming application being based on a data stream providing data units to be aggregated in a sliding window.

14. A method according to claim 13, wherein updating the nodes stored in the memory comprises inserting, by the processor, a received data unit in the forest by updating the first end nodes with corresponding partial aggregations resulting from said insertion.

15. A method according to any of claims 13 or 14 wherein updating the nodes stored in the execution memory comprises deleting, by the processor, one or more previously inserted data units by updating the second end nodes with corresponding partial aggregations resulting from said deletion.

## Patentansprüche

1. Ein Computersystem (128) zum verteilten Speichern von Daten, die als ein Wald aus ausgeglichenen Bäumen mit einem oder mehreren Knoten strukturiert sind, wobei jeder Knoten eine Vielzahl von Datenelementen enthält und der Wald eine Vielzahl von Ebenen, einschließlich einer obersten Ebene und einer untersten oder Blattebene, umfasst; wobei
die Knoten des Waldes erste Endknoten auf einer ersten Seite des Waldes, zweite Endknoten auf einer zweiten Seite des Waldes und Zwischenknoten zwischen den ersten und zweiten Endknoten umfassen; wobei
die ersten Endknoten am weitesten links liegenden Knoten entsprechen und die zweiten Endknoten am weitesten rechts liegenden Knoten entsprechen, oder die ersten Endknoten am weitesten rechts liegenden Knoten entsprechen und die zweiten Endknoten am weitesten links liegenden Knoten; und wobei
das Computersystem Folgendes umfasst:
einen Ausführungsspeicher (129) zum Speichern von mindestens dem ersten und dem zweiten Endknoten;
ein Verbindungsmittel (131) zum Implementieren einer Verbindung mit einem Speichersystem (132), das zum Speichern von mindestens einigen von den nicht im Ausführungsspeicher gespeicherten Zwischenknoten konfiguriert ist, so dass der Austausch von Knoten mit dem Speichersystem über die Verbindung durchgeführt wird;
einen Prozessor (130) zum Aktualisieren der im Ausführungsspeicher gespeicherten Knoten gemäß Aktualisierungskriterien und zum Austauschen von Knoten mit dem Speichersystem durch die Verbindung gemäß Austauschkriterien.

2. Ein Computersystem nach Anspruch 1, wobei das Speichersystem außerhalb des Computersystems liegt und an einer entfernen Stelle in Bezug auf das Computersystem positioniert ist.

3. Ein Computersystem nach einem der Ansprüche 1 oder 2, wobei der Ausführungsspeicher so konfiguriert ist, dass er ferner eine erste Anzahl von aufeinanderfolgenden Zwischenknoten, die dem ersten Endknoten benachbart sind, und eine zweite Anzahl von aufeinanderfolgenden Zwischenknoten, die dem zweiten Endknoten benachbart sind, an jeder von jenen Ebenen speichert, die eine vordefinierte Anzahl von Knoten überschreiten.

4. Ein Computersystem nach einem der Ansprüche 1 bis 3, wobei jeder der ersten Endknoten ein Wurzelknoten eines Baums des Waldes ist.

5. Ein Computersystem nach einem der Ansprüche 1 bis 4, wobei die Aktualisierungskriterien die Verwendung einer Aggregationsfunktion umfassen, die Assoziativität und ein neutrales oder Nullelement enthält; und wobei alle Datenelemente in allen Zwischenknoten verschieden von null sind.

6. Ein Computersystem nach Anspruch 5, wobei jeder der ersten Endknoten auf nicht obersten Ebenen entweder alle Datenelemente verschieden von null hat oder aufeinanderfolgende Datenelemente verschieden von null und aufeinanderfolgende Datenelemente gleich null hat, wobei die Nicht-Null-Datenelemente weiter entfernt sind und die Null-Datenelemente näher in Bezug auf die erste Seite des Waldes sind.

7. Ein Computersystem nach einem der Ansprüche 5 oder 6, wobei jeder der zweiten Endknoten auf nicht obersten Ebenen entweder alle Datenelemente verschieden von null hat oder aufeinanderfolgende Datenelemente verschieden von null und aufeinanderfolgende Datenelemente gleich null hat, wobei die Nicht-Null-Datenelemente weiter entfernt sind und die Null-Datenelemente näher in Bezug auf die zweite Seite des Waldes sind.

8. Ein Computersystem nach einem der Ansprüche 5 bis 7, wobei der Wald unter Verwendung einer Streaming-Anwendung aktualisiert wird, wobei die Streaming-Anwendung auf einem Datenstrom basiert, der Dateneinheiten bereitstellt, die in einem gleitenden Fenster zu aggregieren sind; und wobei Nicht-Null-Datenelemente in Knoten auf der untersten Ebene Dateneinheiten entsprechen, die von dem Datenstrom empfangen werden, und die Aggregation der Nicht-Null-Datenelemente der endgültigen Aggregation des gleitenden Fensters entspricht.

9. Ein Computersystem nach Anspruch 8, wobei Nicht-Null-Datenelemente in Knoten auf nicht-unteren Ebenen partiellen Aggregationen des gleitenden Fensters entsprechen.

10. Ein Computersystem nach Anspruch 9, wobei Nicht-Null-Datenelemente in Zwischenknoten Teilaggregationen entsprechen, die in Teilaggregationen enthalten sind, die Nicht-Null-Datenelementen in Endknoten entsprechen; und wobei die Aggregation von mindestens einigen von den Nicht-Null-Datenelementen in Endknoten der endgültigen Aggregation des gleitenden Fensters entspricht.

11. Ein System zum verteilten Speichern von Daten, die als ein Wald aus ausgeglichenen Bäumen strukturiert sind, wobei das System das Computersystem (128) nach einem der Ansprüche 1 bis 10 und ein Speichersystem (132) umfasst, das ein Verbindungsmittel (134) und einen Speicher (133) zum Speichern von mindestens einigen von den nicht im Computersystem gespeicherten Zwischenknoten enthält, wobei das Computersystem und das Speichersystem durch eine Verbindung zwischen dem Verbindungsmittel (131) des Computersystems und dem Verbindungsmittel des Speichersystems miteinander verbunden werden können.

12. Ein Verfahren zum Aktualisieren von verteilten Daten, die als ein Wald aus ausgeglichenen Bäumen mit einem oder mehreren Knoten strukturiert sind, wobei jeder Knoten eine Vielzahl von Datenelementen enthält und der Wald eine Vielzahl von Ebenen, einschließlich einer obersten Ebene und einer untersten oder Blattebene, umfasst; wobei
die Knoten des Waldes erste Endknoten auf einer ersten Seite des Waldes, zweite Endknoten auf einer zweiten Seite des Waldes und Zwischenknoten zwischen den ersten und zweiten Endknoten umfassen; und wobei
die ersten Endknoten am weitesten links liegenden Knoten entsprechen und die zweiten Endknoten am weitesten rechts liegenden Knoten entsprechen, oder die ersten Endknoten am weitesten rechts liegenden Knoten entsprechen und die zweiten Endknoten am weitesten links liegenden Knoten entsprechen; und wobei das Verfahren folgendes umfasst:
Speichern von mindestens dem ersten und dem zweiten Endknoten in einem Ausführungsspeicher des Computersystems durch einen Prozessor eines Computersystems;
Aktualisieren der im Ausführungsspeicher gespeicherten Knoten gemäß Aktualisierungskriterien durch den Prozessor;
Austauschen von Knoten mit einem Speichersystem durch den Prozessor durch eine Verbindung gemäß Austauschkriterien, wobei das Speichersystem so konfiguriert ist, dass es mindestens einigen von den nicht im Ausführungsspeicher gespeicherten Zwischenknoten speichert, und die Verbindung durch ein Verbindungsmittel des Computersystems implementiert wird.

13. Ein Verfahren nach Anspruch 12, wobei der Wald unter Verwendung von einer Streaming-Anwendung aktualisiert wird, wobei die Streaming-Anwendung auf einem Datenstrom basiert, der Dateneinheiten bereitstellt, die in einem gleitenden Fenster zu aggregieren sind.

14. Ein Verfahren nach Anspruch 13, wobei das Aktualisieren der im Speicher gespeicherten Knoten das Einfügen einer empfangenen Dateneinheit in den Wald durch den Prozessor umfasst, indem die ersten Endknoten mit entsprechenden Teilaggregationen aktualisiert werden, die sich aus der Einfügung ergeben.

15. Ein Verfahren nach einem der Ansprüche 13 oder 14, wobei das Aktualisieren der im Ausführungsspeicher gespeicherten Knoten das Löschen von einer oder mehreren zuvor eingefügten Dateneinheiten durch den Prozessor umfasst, indem die zweiten Endknoten mit entsprechenden Teilaggregationen aktualisiert werden, die sich aus der Löschung ergeben.

## Revendications

1. Un système informatique (128) pour le stockage distribué de données structurées comme une forêt d'arbres équilibrés d'un ou plusieurs nœuds, chaque nœud comprenant une pluralité d'éléments de données, et la forêt comprenant une pluralité de niveaux comprenant un niveau supérieur et un niveau inférieur ou feuille ; dans lequel
les nœuds de la forêt comprennent des premiers nœuds d'extrémité d'un premier côté de la forêt, des deuxièmes nœuds d'extrémité d'un deuxième côté de la forêt et des nœuds intermédiaires entre les premier et deuxième nœuds d'extrémité ; dans lequel
les premiers nœuds d'extrémité correspondent à des nœuds situés plus à gauche et les deuxièmes nœuds d'extrémité correspondent à des nœuds situés plus à droit, ou les premiers nœuds d'extrémité correspondent à des nœuds situés plus à droit et les deuxièmes nœuds d'extrémité correspondent à des nœuds situés plus à gauche ; et dans lequel
le système informatique comprend :
une mémoire d'exécution (129) pour stocker au moins les premier et deuxième nœuds d'extrémité ;
un élément de connexion (131) pour mettre en œuvre une connexion avec un système de stockage (132) configuré pour stocker au moins certains des nœuds intermédiaires qui ne sont pas stockés dans la mémoire d'exécution, de sorte que l'échange de nœuds avec le système de stockage est effectué via ladite connexion ;
un processeur (130) pour mettre à jour les nœuds stockés dans la mémoire d'exécution selon des critères de mise à jour, et pour échanger des nœuds avec le système de stockage via la connexion selon des critères d'échange.

2. Un système informatique selon la revendication 1, dans lequel le système de stockage est externe au système informatique et situé sur un site distant par rapport au système informatique.

3. Un système informatique selon l'une quelconque des revendications 1 ou 2, dans lequel la mémoire d'exécution est configurée pour stocker en outre un premier nombre de nœuds intermédiaires consécutifs voisins du premier nœud d'extrémité, et un deuxième nombre de nœuds intermédiaires consécutifs voisins du deuxième nœud d'extrémité, à chacun de ces niveaux dépassant un nombre prédéfini de nœuds.

4. Un système informatique selon l'une quelconque des revendications 1 à 3, dans lequel chacun des premiers nœuds d'extrémité est un nœud racine d'un arbre de la forêt.

5. Un système informatique selon l'une quelconque des revendications 1 à 4, dans lequel les critères de mise à jour comprennent l'utilisation d'une fonction d'agrégation incluant de l'associativité et un élément neutre ou nul ; et dans lequel tous les éléments de données dans tous les nœuds intermédiaires sont différents de zéro.

6. Un système informatique selon la revendication 5, dans lequel chacun des premiers nœuds d'extrémité à des niveaux non supérieurs a tous les éléments de données différents de zéro, ou bien il a des éléments de données consécutifs différents de zéro et des éléments de données consécutifs égaux à zéro, les éléments de données non nuls étant plus éloignées et les éléments de données nuls étant plus proches par rapport au premier côté de la forêt.

7. Un système informatique selon l'une quelconque des revendications 5 ou 6, dans lequel chacun des deuxièmes nœuds d'extrémité à des niveaux non supérieurs a tous les éléments de données différents de zéro, ou bien il a des éléments de données consécutifs différents de zéro et des éléments de données consécutifs égaux à zéro, les éléments de données non nuls étant plus éloignées et les éléments de données nuls étant plus proches par rapport au deuxième côté de la forêt.

8. Un système informatique selon l'une quelconque des revendications 5 à 7, dans lequel la forêt est mise à jour à l'aide d'une application de streaming, l'application de streaming étant basée sur un flux de données fournissant des unités de données à agréger dans une fenêtre glissante ; et dans lequel des éléments de données non nuls dans des nœuds au niveau inférieur correspondent à des unités de données reçues du flux de données, et l'agrégation desdits éléments de données non nuls correspond à l'agrégation finale de la fenêtre glissante.

9. Un système informatique selon la revendication 8, dans lequel des éléments de données non nuls dans des nœuds à des niveaux non inférieurs correspondent à des agrégations partielles de la fenêtre glissante.

10. Un système informatique selon la revendication 9, dans lequel des éléments de données non nuls dans des nœuds intermédiaires correspondent à des agrégations partielles qui sont incluses dans des agrégations partielles correspondant à des éléments de données non nuls dans des nœuds d'extrémité ; et dans lequel l'agrégation d'au moins certains des éléments de données non nuls dans les nœuds d'extrémité correspond à l'agrégation finale de la fenêtre glissante.

11. Un système pour le stockage distribué de données structurées comme une forêt d'arbres équilibrés, le système comprenant le système informatique (128) selon l'une quelconque des revendications 1 à 10, et un système de stockage (132) comprenant un élément de connexion (134) et une mémoire (133) pour stocker au moins certains des nœuds intermédiaires qui ne sont pas stockés dans le système informatique, dans lequel le système informatique et le système de stockage peuvent être connectés l'un à l'autre par une liaison entre l'élément de connexion (131) du système informatique et l'élément de connexion du système de stockage.

12. Un procédé d'actualisation de données distribuées structurées comme une forêt d'arbres équilibrés d'un ou plusieurs nœuds, chaque nœud comprenant une pluralité d'éléments de données, et la forêt comprenant une pluralité de niveaux comprenant un niveau supérieur et un niveau inférieur ou feuille ; dans lequel
les nœuds de la forêt comprennent des premiers nœuds d'extrémité d'un premier côté de la forêt, des deuxièmes nœuds d'extrémité d'un deuxième côté de la forêt et des nœuds intermédiaires entre les premier et deuxième nœuds d'extrémité ; dans lequel
les premiers nœuds d'extrémité correspondent à des nœuds situés plus à gauche et les deuxièmes nœuds d'extrémité correspondent à des nœuds situés plus à droit, ou les premiers nœuds d'extrémité correspondent à des nœuds situés plus à droit et les deuxièmes nœuds d'extrémité correspondent à des nœuds situés plus à gauche ; et dans lequel le procédé comprend :
stocker, par un processeur d'un système informatique, au moins les premier et deuxième nœuds d'extrémité dans une mémoire d'exécution du système informatique ;
mettre à jour, par le processeur, les nœuds stockés dans la mémoire d'exécution selon des critères de mise à jour ;
échanger, par le processeur, des nœuds avec un système de stockage à travers une connexion selon des critères d'échange, le système de stockage étant configuré pour stocker au moins certains des nœuds intermédiaires qui ne sont pas stockés dans la mémoire d'exécution, et la connexion étant mise en œuvre à travers un élément de connexion du système informatique.

13. Un procédé selon la revendication 12, dans lequel la forêt est mise à jour à l'aide d'une application de streaming, l'application de streaming étant basée sur un flux de données fournissant des unités de données à agréger dans une fenêtre glissante.

14. Un procédé selon la revendication 13, dans lequel la mise à jour des nœuds stockés dans la mémoire comprend l'insertion, par le processeur, d'une unité de données reçue dans la forêt en mettant à jour les premiers nœuds d'extrémité avec des agrégations partielles correspondantes résultant de ladite insertion.

15. Un procédé selon l'une quelconque des revendications 13 ou 14, dans lequel la mise à jour des nœuds stockés dans la mémoire d'exécution comprend la suppression, par le processeur, d'une ou plusieurs unités de données précédemment insérées en mettant à jour les deuxièmes nœuds d'extrémité avec des agrégations partielles correspondantes résultant de ladite suppression.
